# EUROPEAN PATENT APPLICATION

(11) **EP 4 838 987 A1**
(43) Date of publication of application: **11.11.2026**
(21) Application number: 24914679.6
(22) Date of filing: 05.01.2024
(51) Int. Cl.: H04W 72/21

(54) **COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: SHEN, Jia, Dongguan, Guangdong 523860 (CN)
(74) Representative: Taor, Simon Edward William
(86) International application number: PCT/CN2024/070956
(87) International publication number: WO 2025/145450

(57) **Abstract**

The present application relates to a communication method and a communication device. The method comprises: a first communication device determining a first uplink control channel, wherein a time-frequency resource occupied by the first uplink control channel comprises a first time-frequency unit, the first time-frequency unit is used for transmitting a first reference signal, and a time-frequency resource occupied by the first reference signal can be used for transmitting signals other than the first reference signal. In the embodiments of the present application, some time-frequency units for an uplink control channel can simultaneously transmit a reference signal and other signals, so that the uplink control channel transmission performance can be improved.

## Description

### TECHNICAL FIELD

The present disclosure relates to the field of communication, and more particularly, to a communication method and a communication device.

### BACKGROUND

The reference signal (RS) and uplink control information (UCI) of a control channel, e.g., a physical uplink control channel (PUCCH), are typically orthogonally multiplexed. The PUCCHs with different time domain lengths may adopt different multiplexing manners. For example, RS and UCI in a PUCCH with a shorter time domain adopt frequency division multiplexing (FDM), and RS and UCI in a PUCCH with a shorter time domain adopt time-division multiplexing (TDM).

### SUMMARY

Embodiments of the present disclosure provide a communication method and a communication device, which can improve transmission performance.

An embodiment of the present disclosure provides a communication method. The communication method includes that: a first communication device sends a first uplink control channel. A time-frequency resource occupied by the first uplink control channel includes a first time-frequency unit, the first time-frequency unit is used to transmit a first reference signal, and a time-frequency resource occupied by the first reference signal is available to transmit signals other than the first reference signal.

An embodiment of the present disclosure provides a communication method. The communication method includes that: a second communication device receives a first uplink control channel. A time-frequency resource occupied by the first uplink control channel includes a first time-frequency unit, the first time-frequency unit is used to transmit a first reference signal, and a time-frequency resource occupied by the first reference signal is available to transmit signals other than the first reference signal.

An embodiment of the present disclosure provides a first communication device. The first communication device includes: a sending unit for sending a first uplink control channel. A time-frequency resource occupied by the first uplink control channel includes a first time-frequency unit, the first time-frequency unit is used to transmit a first reference signal, and a time-frequency resource occupied by the first reference signal is available to transmit signals other than the first reference signal.

An embodiment of the present disclosure provides a second communication device. The second communication device includes: a receiving unit for receiving a first uplink control channel. A time-frequency resource occupied by the first uplink control channel includes a first time-frequency unit, the first time-frequency unit is used to transmit a first reference signal, and a time-frequency resource occupied by the first reference signal is available to transmit signals other than the first reference signal.

An embodiment of the present disclosure provides a communication device, and the communication device includes a transceiver, a processor and a memory. The memory is used for storing a computer program, the transceiver is used for communicating with other devices, and the processor is used for calling and running the computer program stored in the memory to cause the communication device to perform the communication method described above.

An embodiment of the present disclosure provides a chip for implementing the communication method described above. Specifically, the chip includes a processor. The processor is used for calling and running a computer program in a memory, to cause a device on which the chip is mounted to perform the communication method described above.

An embodiment of the present disclosure provides a computer readable storage medium, having stored thereon a computer program that, when executed by a device, causes the device to perform the communication method described above.

An embodiment of the present disclosure provides a computer program product including computer program instructions. The computer program instructions cause a computer to perform the communication method described above.

An embodiment of the present disclosure provides a computer program. When running on a computer, the computer program causes the computer to perform the communication method described above.

### BRIEF DESCRIPTION OF THE DRAWINGS

FIG. 1 is a schematic diagram of an application scenario according to an embodiment of the present disclosure.
FIG. 2 is a schematic diagram of modules of a communication system.
FIG. 3 is a schematic diagram of a channel estimation and recovery process in a communication system.
FIG. 4 is a schematic diagram of resource allocation for data symbols and pilot symbols under different configurations.
FIG. 5 is a schematic diagram of non-orthogonal superimposed pilot resource allocation.
FIG. 6 is a schematic diagram of a structure of a neuron operation model.
FIG. 7 is a schematic diagram of a fully connected neural network.
FIG. 8 is a schematic diagram of a basic structure of a convolutional neural network.
FIG. 9 is a schematic diagram of a basic long short-term memory (LSTM) unit structure.
FIG. 10 is a schematic diagram of an AI-based neural network implementing channel estimation.
FIG. 11 is a schematic diagram of a structure of a PUCCH with a time domain length of one symbol.
FIG. 12 is a schematic diagram of a structure of a PUCCH with a time domain length of two symbols.
FIG. 13A, FIG. 13B and FIG. 13C are schematic diagrams of structures of PUCCHs with a longer time domain length.
FIG. 14 is a schematic flowchart of a communication method according to an embodiment of the present disclosure.
FIG. 15 is a schematic flowchart of a communication method according to another embodiment of the present disclosure.
FIG. 16 is a schematic flowchart of a communication method according to another embodiment of the present disclosure.
FIG. 17 is a schematic flowchart of a communication method according to an embodiment of the present disclosure.
FIG. 18 is an example diagram in which a PUCCH with a length of 7 symbols includes non-orthogonal RS symbols.
FIG. 19 is an example diagram in which a PUCCH with a length of 14 symbols includes non-orthogonal RS symbols.
FIG. 20 is an example diagram in which a PUCCH with a length of 14 symbols includes non-orthogonal RS symbols.
FIG. 21 is an example diagram in which a PUCCH with a length of 7 symbols includes non-orthogonal RS symbols.
FIG. 22 is an example diagram in which a PUCCH with a length of 14 symbols includes non-orthogonal RS symbols.
FIG. 23 is an example diagram in which a PUCCH with a length of 7 symbols includes non-orthogonal RS symbols.
FIG. 24 is an example diagram in which a PUCCH with a length of 14 symbols includes non-orthogonal RS symbols.
FIG. 25 is an example diagram in which a PUCCH with a length of 7 symbols includes non-orthogonal RS symbols.
FIG. 26 is an example diagram in which a PUCCH with a length of 14 symbols includes non-orthogonal RS symbols.
FIG. 27 is an example diagram in which a PUCCH with a length of one symbol includes non-orthogonal RS resource elements (REs).
FIG. 28 is an example diagram in which a PUCCH with a length of 2 symbols includes non-orthogonal RS REs.
FIG. 29 is an example diagram in which a PUCCH with a length of one symbol includes non-orthogonal RS REs.
FIG. 30 is an example diagram in which a PUCCH with a length of 2 symbols includes non-orthogonal RS REs.
FIG. 31 is an example diagram in which a PUCCH with a length of one symbols includes non-orthogonal RS REs.
FIG. 32 is an example diagram in which a PUCCH with a length of 2 symbols includes non-orthogonal RS REs.
FIG. 33 is an example diagram in which a PUCCH with a length of one symbols includes non-orthogonal RS REs.
FIG. 34 is an example diagram in which a PUCCH with a length of 2 symbols includes non-orthogonal RS REs.
FIG. 35 is a schematic block diagram of a first communication device according to an embodiment of the present disclosure.
FIG. 36 is a schematic block diagram of a second communication device according to an embodiment of the present disclosure.
FIG. 37 is a schematic block diagram of a communication device according to an embodiment of the present disclosure.
FIG. 38 is a schematic block diagram of a chip according to an embodiment of the present disclosure.
FIG. 39 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure.

The technical solution according to the embodiments of the present disclosure can be applied to various communication systems, such as a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial Networks (NTN) system, a Universal Mobile Telecommunication System (UMTS), Wireless Local Area Networks (WLAN), Wireless Fidelity (WiFi), a fifth-generation (5G) communication system, or other communication systems, etc.

Generally speaking, the conventional communication system supports a limited number of connections and is easy to implement. However, with the development of communication technology, the mobile communication system will not only support conventional communication, but also support, for example, device-to-device (D2D) communication, machine-to-machine (M2M) communication, Machine Type Communication (MTC), vehicle-to-vehicle (V2V) communication, or vehicle-to-everything (V2X) communication, and the like. The embodiment of the present disclosure may also be applied to these communication systems.

In an implementation, the communication system according to the embodiment of the present disclosure may be applied to a Carrier Aggregation (CA) scenario, a Dual Connectivity (DC) scenario, or a Standalone (SA) network layout scenario.

In an implementation, the communication system in the embodiment of the present disclosure may be applied to an unlicensed spectrum, and the unlicensed spectrum may also be considered as a shared spectrum. Alternatively, the communication system in the embodiment of the present disclosure may also be applied to a licensed spectrum, and the licensed spectrum may also be considered as a non-shared spectrum.

The embodiments of the present disclosure describe various embodiments in view of a network device and a terminal device. The terminal device may also be referred to as User Equipment (UE), an access terminal, a subscriber unit, a subscriber station, a mobile station, a mobile platform, a remote station, a remote terminal, a mobile device, a user terminal, a terminal, a wireless communication device, a user agent or a user apparatus, and the like.

The terminal device may be a station (ST) in a WLAN, may be a cellular telephone, a cordless telephone, a Session Initiation Protocol (SIP) telephone, a Wireless Local Loop (WLL) station, a Personal Digital Assistant (PDA) device, a handheld device having wireless communication capabilities, a computing device, or other processing device connected to a wireless modem, an in-vehicle device, a wearable device, a terminal device in a next generation communication system such as an NR network, or a terminal device in a future evolved Public Land Mobile Network (PLMN) network, or the like.

In an embodiment of the present disclosure, the terminal device may be deployed on land, including indoor or outdoor, handheld, wearable, or vehicle-mounted; it may also be deployed on the water (such as ships, etc.); it may also be deployed in the air (e.g. on aircraft, balloons and satellites, etc.).

In an embodiment of the present disclosure, the terminal device may be a Mobile Phone, a tablet (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example and not limitation, in an embodiment of the present disclosure, the terminal device may also be a wearable device. A wearable device can also be called a wearable smart device, which is a general term for wearable devices that are developed by applying a wearable technology to intelligently design daily wear, such as glasses, gloves, watches, clothing and shoes. A wearable device is a portable device that is worn directly on the body or is integrated into the user's clothes or accessories. Wearable devices are not only hardware devices, but also realize powerful functions through software support, data interaction and cloud interaction. Generalized wearable smart devices have full functions, a large size, and can realize complete or partial functions without relying on smart phones, for example, smart watches or smart glasses, as well as those that only focus on a certain type of application functions and need to be used in conjunction with other devices (for example, smart phones), such as various smart bracelets and smart jewelry for physical sign monitoring.

In an embodiment of the present disclosure, the network device may be a device for communicating with a mobile device, may be an Access Point (AP) in a WLAN. The network device may be an evolutionary Node B (eNB, or eNodeB) in LTE, or a relay station or access point, or a vehicle-mounted device, a wearable device, a network device (gNB) in an NR network, a network device in a future evolved PLMN network, or a network device in an NTN network, or the like.

As an example and not limitation, in an embodiment of the present disclosure, the network device may have mobile characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station provided on land, on a water area, or the like.

In an embodiment of the present disclosure, the network device may provide a service for a cell, and the terminal device communicates with the network device through a transmission resource (for example, frequency domain resource or spectrum resource) used by the cell. The cell may be a cell corresponding to the network device (for example, a base station), and the cell may belong to a macro base station, or belong to a base station corresponding to a small cell. The small cell here may include: a Metro cell, a Micro cell, a Pico cell, a Femto cell, etc. These small cells have the characteristics of small coverage and low transmission power, and are suitable for providing a high-speed data transmission service.

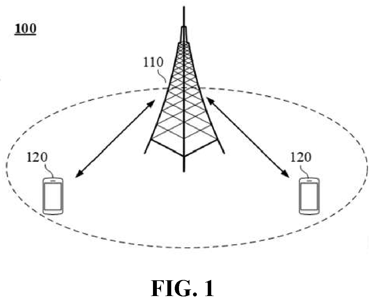

FIG. 1 exemplarily illustrates a communication system 100. The communication system includes a network device 110 and two terminal devices 120. In an implementation, the communication system 100 may include multiple network devices 110. The coverage range of each network device 110 may include another number of terminal devices 120, which is not limited in the embodiment of the present disclosure.

In an implementation, the communication system 100 may further include other network entities, such as a Mobility Management Entity (MME), an Access and Mobility Management Function (AMF), and the like. The embodiment of the present disclosure is not limited thereto.

The network device may further include an access network device and a core network device. That is, the wireless communication system further includes multiple core networks for communicating with an access network device. The access network device may be an evolutionary node B (abbreviated as eNB or e-NodeB), a macro base station, a micro base station (also referred to as a "small base station"), a pico base station, an access point (AP), a transmission point (TP) or a new generation Node B (gNodeB), or the like in a long-term evolution (LTE) system, a next radio (NR) system or an authorized auxiliary access long-term evolution (LAA-LTE) system.

It should be understood that a device having a communication function in the network/system in the embodiment of the present disclosure may be referred to as a communication device. Taking the communication system illustrated in FIG. 1 as an example, the communication device may include a network device and a terminal device having a communication function, and the network device and the terminal device may be specific devices in the embodiment of the present disclosure, and will not be described herein. The communication device may also include other devices in the communication system, for example, other network entities such as a network controller and a mobility management entity, but the embodiment of the present disclosure is not limited thereto.

It should be understood that the terms "system" and "network" are often used interchangeably herein. The term "and/or" herein is only an association relationship describing associated objects, and indicates that there may be three kinds of relationships. For example, A and/or B may indicate that A exists alone, A and B exist simultaneously, and B exists alone. In addition, the character "/" herein generally indicates that the associated objects are in an "or" relationship.

It should be understood that the "indicate" mentioned in the embodiments of the present disclosure may be a direct indication, an indirect indication, or may represent an associated relationship. For example, A indicates B, which may mean that A directly indicates B, for example, B can be acquired through A. It may also mean that A indirectly indicates B, for example, A indicates C, and B can be acquired through C. It may also mean that there is an associated relationship between A and B.

In the description of the embodiments of the present disclosure, the term "correspond" may represent that there is a direct correspondence or indirect correspondence relationship between the two, may represent that there is an association between the two, or may represent a relationship of indicating and being indicated, configuring and being configured, or the like.

In order to facilitate understanding the technical solutions of the embodiments of the present disclosure, the related technologies of the embodiments of the present disclosure will be described below. The related technologies below can be arbitrarily combined with the technical solutions of the embodiments of the present disclosure as options, and all of them belong to the protection scope of the embodiments of the present disclosure.

### I. Wireless communication system

In a wireless communication system, a basic workflow may generally include the following operations. At the transmitting end, the transmitter encodes and modulates the source bitstream to obtain modulated symbols. The pilot symbols are inserted into the modulated symbols for channel estimation and symbol detection at the receiving end. Finally, a sending signal is formed, which passes through the channel to the receiving end. At the receiving end, the receiver firstly uses the pilot frequency to perform channel estimation, and feeds back the channel state information (CSI) to the sending end through the feedback link, which is used for the transmitter to adjust the channel encoding, modulation, precoding, and other manners. Finally, the receiver obtains the final recovered bitstream through the operations of symbol detection, demodulation and channel decoding, etc.

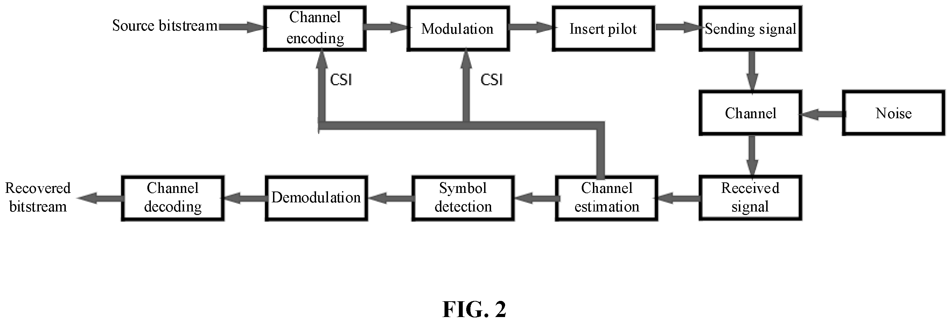

As illustrated in FIG. 2, there are other unlisted modules in the communication system, such as resource mapping, precoding, interference cancellation, CSI measurement, and other modules. These modules can be designed and implemented separately, and then respective independent module can be integrated to form a complete wireless communication system.

### II. Channel estimation and pilot resource allocation

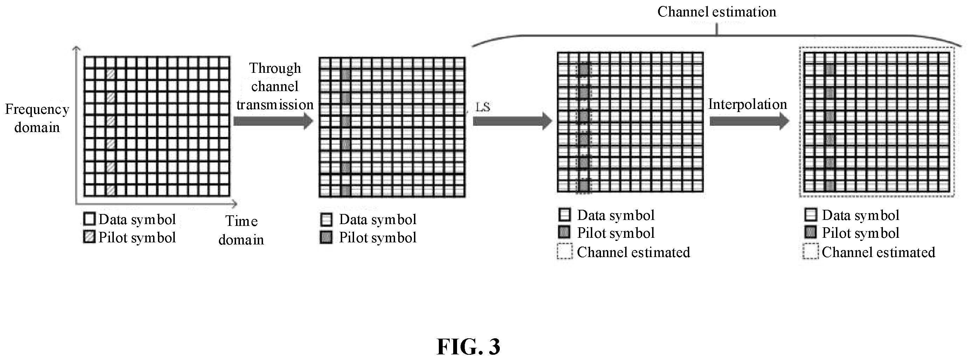

Due to the complexity and time-varying nature of the wireless channel environment, in the above wireless communication system, the estimation and recovery of the wireless channel by the receiver directly affect the final data recovery performance. The channel estimation and recovery process in the current communication system is illustrated in FIG. 3. The entire physical resource block (PRB) contains multiple resource elements (REs), and the transmitter assigns, on different REs of the PRB, specific reference signals (i.e. pilot symbols) known to the receiver and information data symbols, such as CSI-reference signals (RSs), demodulation reference signals (DMRSs), etc. For the channel estimation stage, according to the real pilot and the received pilot, the receiver may estimate, by using LS, the channel information at the RE position for placing the pilot symbol. Further, the receiver recovers and obtains the channel information on the full PRB by interpolation algorithm according to the channel information estimated at the pilot position (RE), which is used for subsequent channel information feedback or data recovery, etc.

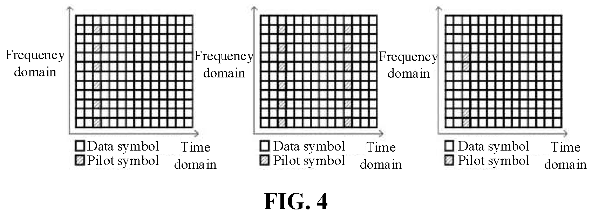

In the 5G NR system, data symbols and pilot symbols are placed on different REs. FIG. 4 illustrates several patterns of resource allocation for data symbols and pilot symbols under different configurations. It can be seen that the data symbol and pilot symbol are orthogonal to each other on time, frequency or code division resources. That is, the same RE can only be used to place data symbols or pilot symbols, and the RE transmitting pilot symbols cannot transmit data, resulting in the waste of system bandwidth. Different wireless environments require different pilot densities. For example, when the moving speed of the UE is higher and the channel characteristics vary faster in time, it is necessary to place denser pilot symbols in the time domain dimension, so as to ensure the quality of channel estimation.

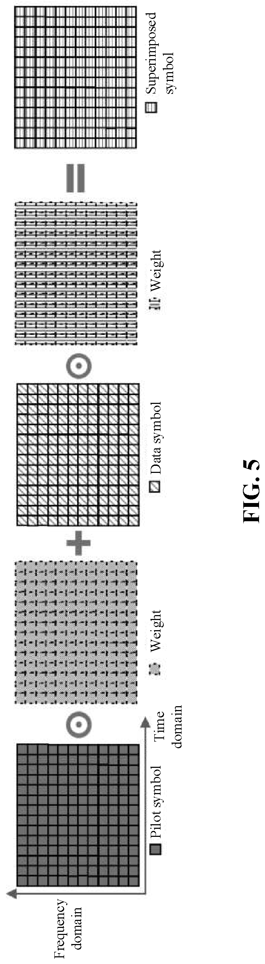

The non-orthogonal superimposed pilot is further described below. Considering that the resource unit allocated by the system is N subcarriers × M time-domain orthogonal frequency division multiplexing (OFDM) symbols, for example, the resource unit may be one PRB, one subband, multiple consecutive PRBs, or multiple consecutive subbands, etc. The data matrix transmitted on this resource is D∈*Q*^{*N*×*M*}, where Q represents a set of data symbols; and the pilot matrix is P∈*P*^{*N*×*M*}, where P represents a set of pilot symbols. As illustrated in FIG. 5, this method considers the linear superimposition of two matrices: $S = V ⊙ D + X ⊙ P$ (1).

S∈*C*^{*N*×*M*} is the superimposed symbol, C represents the complex set, the data weight matrix V=*sqrt*(A) ∈ [0,1]^{*N*×*M*} and the pilot weight matrix X=*sqrt*(1-A) ∈ [0,1]^{*N*×*M*}, A∈[0,1]^{*N*×*M*}, sqrt(·) represents the square root calculation, and ⊙ represents the Hadmar product.

When the size of the resource unit allocated by the system changes, the weight matrix, data matrix and pilot matrix also change in equal dimensions. The non-orthogonal pilots, aided by an AI receiver at the receiver side, are used to jointly perform channel estimation and symbol detection on the received superimposed signals. At the same time, the pilot weight matrix X, the data weight matrix V and the matrix A correspond one to one. After X is fixed, the matrix V and A are also fixed. The pattern in the present disclosure refers to the pattern of the matrix X, V or A. Note that the pattern of X corresponds to the pattern of V and the pattern of A one-to-one.

### III. Neural network

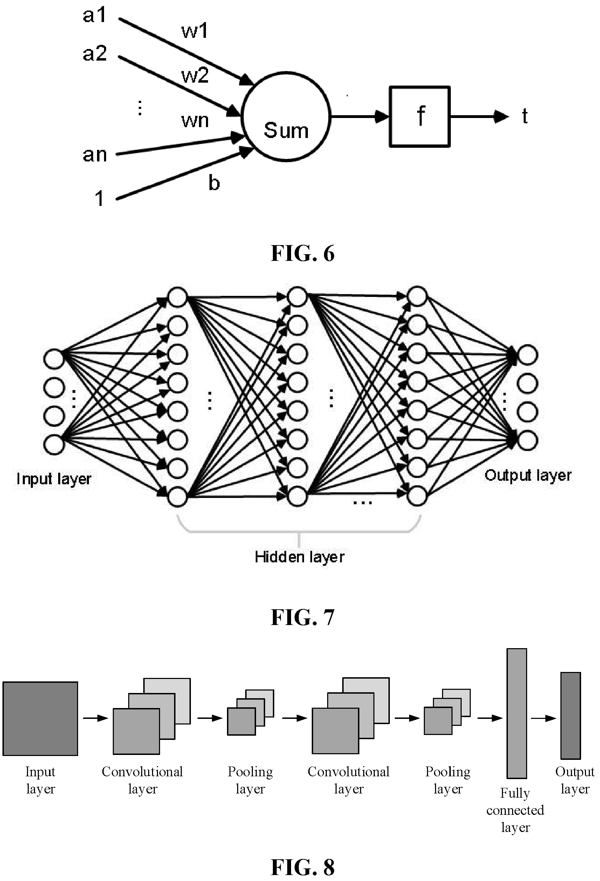

Neural network is an operation model composed of multiple neuron nodes connected to each other, in which the connection between nodes represents the weighted value from the input signal to the output signal, which is called weight. Each node performs a weighted summation of different input signals, and outputs through a specific activation function. Neuronal structure is as illustrated in FIG. 6.

A simple fully connected neural network is illustrated in FIG. 7, which includes an input layer, a hidden layer and an output layer. Through different connection manners of multiple neurons, weights and activation functions may be used to generate different outputs, and then the mapping relationship from input to output can be fitted. Each upper-level node is connected to all of its lower-level nodes.

Let's continue to introduce the convolutional neural network. The basic structure of the convolutional neural network includes: an input layer, multiple convolutional layers, multiple pooling layers, a fully connected layer and an output layer, as illustrated in FIG. 8. Each neuron of the convolution kernel in the convolution layer is locally connected with its input, and the local maximum or average value feature of a certain layer is extracted by introducing a pooling layer, which effectively reduces the parameters of the network and mines the local features, so that the convolutional neural network can converge quickly and obtain excellent performance.

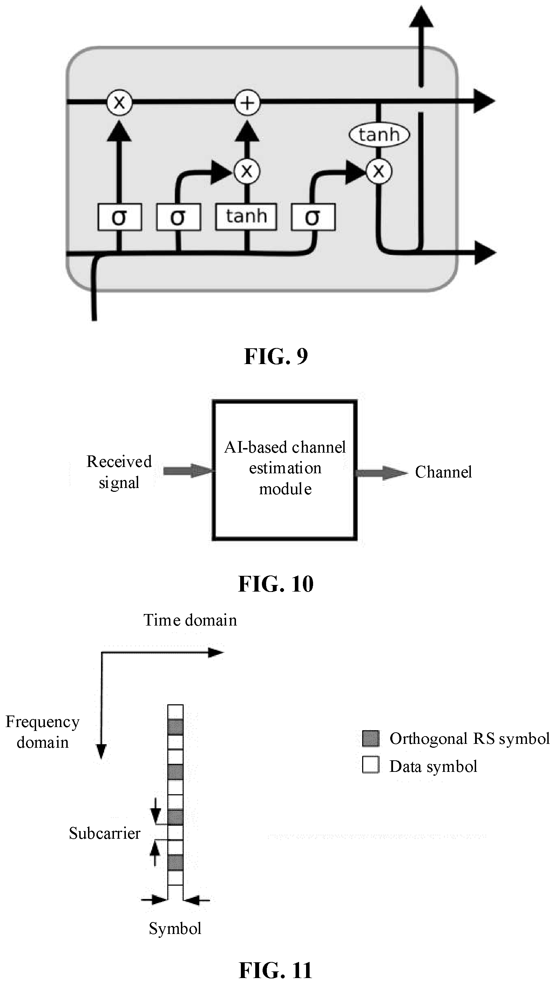

Lastly, we introduce the recurrent neural network (RNN). The RNN is a kind of neural network to model the sequence data. It has made remarkable achievements in the fields of natural language processing such as machine translation and speech recognition. Specifically, the network memorizes the information of the past moments and uses it in the calculation of the current output. That is, the nodes between the hidden layers are no longer unconnected but connected, and the input of the hidden layer includes not only the output of the input layer but also the output of the hidden layer at the previous moment. Long short-term memory (LSTM) is a commonly used recurrent neural network, including the basic LSTM unit structure illustrated in FIG. 9. Unlike RNN only considering the most recent state, the cell states of LSTM will be used to decide which states should be left and which states should be forgotten, which solves the shortcomings of traditional RNN in the long-term memory.

### IV. Channel estimation based on AI

The related art includes the AI-based neural network to implement channel estimation. As illustrated in FIG. 10, the AI-based channel estimation module is internally implemented as a neural network such as a deep neural network (DNN), a convolutional neural network (CNN), or the like. The input of the module is a pilot symbol and a received signal corresponding to the RE of pilot symbol, and the output information is the result of the entire PRB channel estimation. For the input information of the AI-based channel estimation module described above, in addition to the reference signal, other auxiliary information may be also added to enhance the performance of AI-based channel estimation and recovery modules for users. For example, the other auxiliary information may be an energy level, a delay characteristic, a noise characteristic for the received signal corresponding to the RE of data symbol or for all of the received signals.

Furthermore, with the framework unchanged, the network model structure inside the channel estimation does not exclude the flexible design according to other models in the third point above.

### V. Reference signal structure for 5G NR PUCCH

The reference signal (RS) and the uplink control information (UCI) of the 5G NR PUCCH are orthogonally multiplexed. PUCCHs with different time domain lengths adopt different multiplexing manners. The RS and UCI in PUCCH with a shorter time domain adopt frequency division multiplexing (FDM), that is, on one OFDM symbol, a part of subcarriers are used to transmit the RS and a part of subcarriers are used to transmit the UCI. The RS and UCI in PUCCH with a shorter time domain adopt time division multiplexing (TDM), that is, within a certain time duration, a part of OFDM symbols are used to transmit the RS and a part of OFDM symbols are used to transmit the UCI.

For example, as illustrated in FIG. 11, a structure of a 5G NR PUCCH with a time domain length of one symbol is composed of one symbol in the time domain ×12 subcarriers in the frequency domain, and includes 12 REs, which are four orthogonal RS REs and eight UCI REs (FDM).

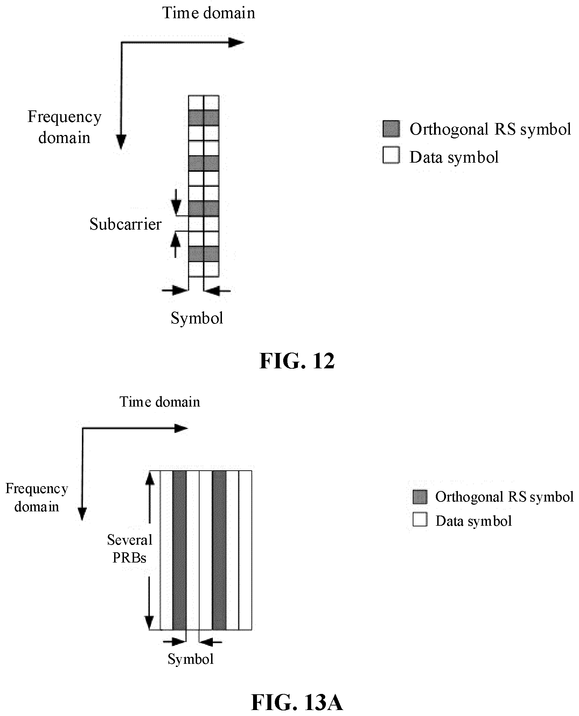

As illustrated in FIG. 12, a structure of a 5G NR PUCCH with a time domain length of two symbols is composed of two symbols in the time domain, and the structure on each symbol is the same as that illustrated in FIG. 11.

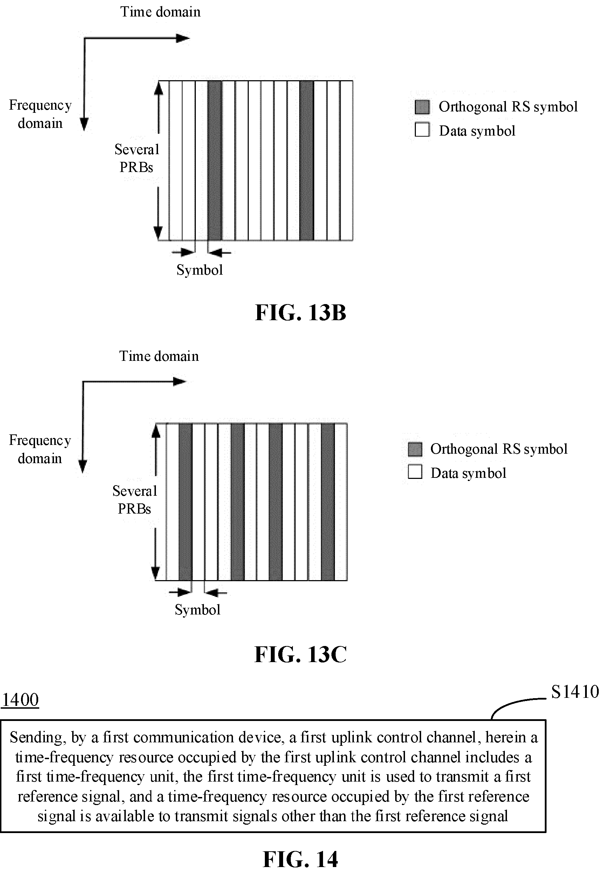

Examples of structures of two 5G NR PUCCHs with a longer time domain length are illustrated in FIGS. 13A, 13B, and 13C. For example, a PUCCH with a length of 7 symbols includes 2 symbols for transmitting RS and 5 symbols for transmitting UCI (as illustrated in FIG. 13A). A PUCCH with a length of 14 symbols includes 2 symbols for transmitting RS and 12 symbols for transmitting UCI (as illustrated in FIG. 13B). A PUCCH with a length of 14 symbols includes 4 symbols for transmitting RS and 10 symbols for transmitting UCI (as illustrated in FIG. 13C).

An NR PDCCH is composed of N (N = 1, 2, 4, 8 or 16) identical CCEs arranged in the frequency domain. Taking a three-symbol-long CORESET as an example, the structures of the PDCCH are illustrated in FIGS. 13A, 13B and 13C. N is called aggregation level. The larger N, the more CCE repetitions, the better PDCCH transmission performance, but the more time-frequency resources are consumed.

**Table 1: RS patterns for PUCCH formats 3, 4**

| | RS time-domain symbol position (symbol index starts from 0) | | | |
|---|---|---|---|---|
| PUCCH length | No additional RS configured | | Additional RS configured | |
| | No frequency hopping | Frequency hopping | No frequency hopping | Frequency hopping |
| 4 | 1 | 0, 2 | 1 | 0, 2 |
| 5 | 0, 3 | | 0, 3 | |
| 6 | 1, 4 | | 1, 4 | |
| 7 | 1, 4 | | 1, 4 | |
| 8 | 1, 5 | | 1, 5 | |
| 9 | 1, 6 | | 1, 6 | |
| 10 | 2, 7 | | 1, 3, 6, 8 | |
| 11 | 2, 7 | | 1, 3, 6, 9 | |
| 12 | 2, 8 | | 1, 4, 7, 10 | |
| 13 | 2, 9 | | 1, 4, 7, 11 | |
| 14 | 3, 10 | | 1, 5, 8, 12 | |

Usually, the orthogonal reference signal needs to exclusive use of certain time-frequency resources, and other data cannot be transmitted on these time-frequency resources, so the overhead of the reference signal is larger. Although AI channel estimation algorithm based on non-orthogonal reference signals can reduce the overhead of reference signal to 0, since AI channel estimation algorithm is usually trained for a certain channel scenario, which may lead to unstable channel estimation performance in complex channel scenarios due to the insufficient generalization ability. If non-orthogonal reference signals are adopted exclusively, when the channel scenario suddenly changes, the channel estimation performance is deteriorated since the AI channel estimation algorithm in use cannot adapt to the new channel scenario.

FIG. 14 is a schematic flowchart of a communication method 1400 according to an embodiment of the present disclosure. The method may optionally be applied to the system illustrated in FIG. 1, but is not limited thereto. The method includes at least some of the following.

At S1410, a first communication device sends a first uplink control channel. A time-frequency resource occupied by the first uplink control channel includes a first time-frequency unit, the first time-frequency unit is used to transmit a first reference signal, and a time-frequency resource occupied by the first reference signal is available to transmit signals other than the first reference signal.

In the embodiment of the present disclosure, the time-frequency resource occupied by the first uplink control channel may be simply referred to as the time-frequency resource of the first uplink control channel or the time-frequency resource of the first uplink control channel. The time-frequency resource occupied by the first reference signal is a first time-frequency unit, and the first time-frequency unit is available to transmit signals other than the first reference signal. The first reference signal is a signal that may be transmitted in superimposition with other signals. For example, the first reference signal may be a non-orthogonal reference signal. The principle of the superimposed transmission of the non-orthogonal reference signal with other signals can be referred to the related description of the non-orthogonal superimposed pilot described above. The superimposed signal of the first reference signal and other signals may undergo channel estimation, symbol detection and other processing at the receiving end through AI or the like.

In an embodiment of the present disclosure, the first uplink control channel may be referred to as a first type of uplink control channel. The first time-frequency unit may be referred to as a first type of time-frequency unit, and the first reference signal may be referred to as a first type of reference signal.

In an implementation, the time-frequency resource occupied by the first uplink control channel further includes a second time-frequency unit. The second time-frequency unit is used to transmit a second reference signal, a time-frequency resource occupied by the second reference signal is unavailable to transmit signals other than the second reference signal.

In the embodiment of the present disclosure, the time-frequency resource occupied by the second reference signal is a second time-frequency unit, and the second time-frequency unit is unavailable to transmit other signals other than the second reference signal. The second reference signal is a signal that cannot be transmitted in superimposition with other signals. For example, the second reference signal may be an orthogonal reference signal.

In the embodiment of the present disclosure, the second time-frequency unit may be referred to as a second type of time-frequency unit, and the second reference signal may be referred to as a second type of reference signal.

In an embodiment of the present disclosure, the first communication device may be a terminal device, for example, UE, and the uplink control channel may be a PUCCH. The uplink control channel may occupy multiple time-frequency units. In an example, the PUCCH occupies M first frequency domain units in the frequency domain and N first time domain units in the time domain. M is greater than or equal to 1, and N is greater than or equal to 1. The first frequency domain unit may be a resource block (RB), and the first time domain unit may be an OFDM symbol. The time-frequency unit includes one first frequency domain unit in the frequency domain and one first time domain unit in the time domain.

The first uplink control channel may be a first PUCCH. For example, the M × N time-frequency units of the first PUCCH at least include one first time-frequency unit. The first time-frequency unit is used for transmitting a first reference signal, and the time-frequency unit occupied by the first reference signal is available to transmit other signals, the other signals being signals other than the first reference signal. In an example, another time-frequency unit of the first PUCCH is a second time-frequency unit. The second time-frequency unit includes a second reference signal, and the frequency domain resources occupied by the second reference signal is unavailable to transmit other signals, the other signals being signals other than the second reference signal. The second time-frequency unit may include a reference signal, or may not include a reference signal.

In an implementation, the first reference signal is a non-orthogonal reference signal.

In an implementation, the first time-frequency unit includes a first OFDM symbol.

In the embodiment of the present disclosure, the first time-frequency unit includes the first OFDM symbol, which can be understood as: the first time-frequency unit includes one OFDM symbol in the time domain. The first OFDM symbol may be all REs on a certain OFDM symbol of all RBs occupied by the first uplink control channel. For example, if a PUCCH occupies 4 RBs, the first OFDM symbol of the PUCCH includes all REs on one OFDM symbol of the 4 RBs.

In an implementation, the first time-frequency unit includes a first RE. In the embodiment of the present disclosure, the first time-frequency unit includes the first RE, which can be understood as: the first time-frequency unit includes one RE in the time and frequency domain. For example, if a PUCCH occupies 4 RBs, the first RE of the PUCCH includes one RE on one OFDM symbol of the 4 RBs.

In an implementation, the second reference signal is an orthogonal reference signal.

In an implementation, the second time-frequency unit includes a second OFDM symbol. For example, a time-frequency resource occupied by the first PUCCH (which may be simply referred to as a first PUCCH resource) includes a first OFDM symbol and a second OFDM symbol, that is, a full TDM structure. The first PUCCH resource may be composed of N OFDM symbols, N being greater than or equal to 1. The first PUCCH resource at least includes one first OFDM symbol, in which frequency domain resources occupied by all reference signals (for example, non-orthogonal reference signals) are available to transmit other signals, the other signals being signals other than the above reference signals. Another OFDM symbol constituting the first PUCCH resource is a second OFDM symbol, in which frequency domain resources occupied by all reference signals (for example, orthogonal reference signals) are unavailable to transmit other signals, the other signals being signals other than the above reference signals. The second OFDM symbol may or may not include frequency domain resources occupied by the reference signal.

In an implementation, the second time-frequency unit includes a second RE. For example, a first PUCCH resource includes a first RE and a second RE, i.e., an FDM structure. The first PUCCH resource may be composed of M OFDM symbols with M REs on each OFDM symbol, where M and N are greater than or equal to 1. The first PUCCH resource includes at least one first RE, in which REs occupied by all reference signals (for example, non-orthogonal reference signals) are available to transmit other signals, the other signals being signals other than the above reference signals. Another RE constituting the first PUCCH resource is a second RE, in which REs occupied by all reference signals (for example, orthogonal reference signals) are unavailable to transmit other signals, the other signals being signals other than the above reference signals. The second RE may or may not include the RE occupied by the reference signal.

In the embodiment of the present disclosure, some time-frequency units of the uplink control channel can simultaneously transmit a reference signal and other signals, and the transmission performance of the uplink control channel can be improved.

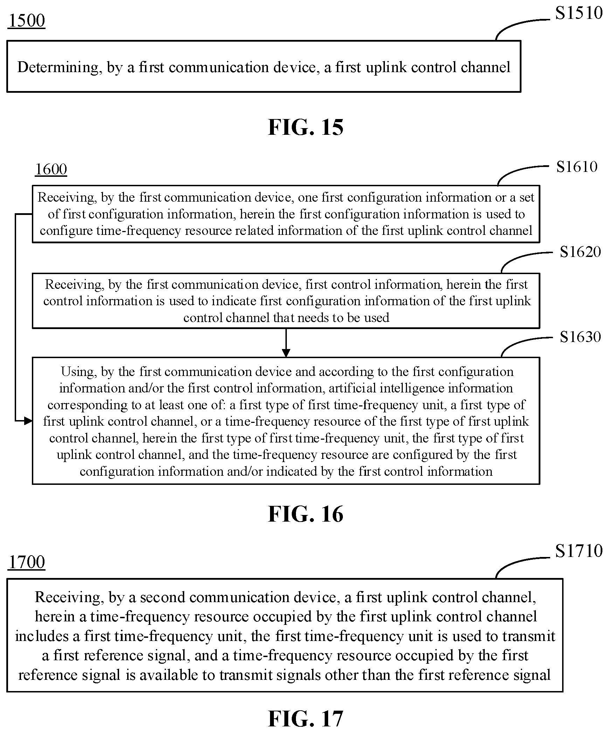

FIG. 15 is a schematic flowchart of a communication method according to another embodiment of the present disclosure. The method 1500 may include one or more features of the methods described above. The method may optionally be applied to the system illustrated in FIG. 1, but is not limited thereto. The method includes at least some of the following. At S1510, the first communication device determines a first uplink control channel.

In the embodiment of the present disclosure, the time-frequency resource occupied by the first uplink control channel includes a first time-frequency unit. The first time-frequency unit is used to transmit a first reference signal, a time-frequency resource occupied by the first reference signal is available to transmit signals other than the first reference signal. For specific explanations and examples of the first uplink control channel, the first time-frequency unit, the first reference signal, and the like, refer to the relevant description in the above-described embodiment, which will not be described again here.

In an embodiment of the present disclosure, the first communication device (for example, UE) may send a first PUCCH to a second communication device (for example, a network device).

In the embodiment of the present disclosure, S1510 may be combined with S1410. For example, the first communication device executes S1510 first; after determining the first PUCCH, the first communication device executes S1410 to send the first PUCCH to the second communication device.

FIG. 16 is a schematic flowchart of a communication method according to another embodiment of the present disclosure. The method 1600 may include one or more features of the methods described above. In an implementation, the method further includes that: at S1610, the first communication device receives one piece of first configuration information or a set of first configuration information. The first configuration information is used to configure related information of a time-frequency resource of the first uplink control channel.

In an embodiment of the present disclosure, the first communication device may receive one or a set of first configuration information from the second communication device. One piece of first configuration information may include related information of a time-frequency domain unit for configuring a type of first PUCCH.

In an implementation, the first configuration information is used to configure at least one of:
information of a frequency domain position of the first reference signal in the first time-frequency unit;
information of a time domain position of the first reference signal in the first time-frequency unit;
information of a frequency domain position of a second reference signal in the first time-frequency unit;
information of a time domain position of the second reference signal in the first time-frequency unit;
artificial intelligence information corresponding to one or more types of first time-frequency units;
artificial intelligence information corresponding to one or more types of first uplink control channels; or
artificial intelligence information corresponding to a time-frequency resource of one or more types of first uplink control channels.

For example, the information of the time domain position of the first reference signal in the first time-frequency unit may include at least one of: the number, positions, and serial numbers of OFDM symbols occupied by the first reference signal, or whether the first time-frequency unit includes the first reference signal.

For example, the information of the frequency domain position of the first reference signal in the first time-frequency unit may include at least one of: the number, positions, and serial numbers of REs occupied by the first reference signal, or whether the first time-frequency unit includes the first reference signal. Optionally, if the first configuration information is used to configure information of the frequency domain position of the second reference signal in the first time-frequency unit, the terminal may determine that except for the frequency domain position of the second reference signal, other frequency domain positions in the first time-frequency unit are all used to transmit the first reference signal.

By configuring the time-domain position or the frequency-domain configuration of the first reference signal in the first time-frequency unit through the first configuration information, it can simply and conveniently determine the time-frequency resources occupied by the uplink control channel.

For another example, the information of the time-domain position and/or the frequency-domain position of the first time-frequency unit includes at least one of: the number, position, and serial number of the first time-frequency unit, or whether the uplink control channel includes the second time-frequency unit, or the like. Optionally, if the first configuration information is used to configure the information of the time-domain position and/or the frequency-domain position of the second time-frequency unit included in the first PUCCH, the terminal determines that except for the time-frequency domain position of the second time-frequency unit, other time-frequency domain positions in the first PUCCH are all used to transmit the first time-frequency unit.

By configuring the time-domain position and the frequency-domain configuration of the first reference signal in the first time-frequency unit through the first configuration information, it can more flexibly determine the time-frequency resources occupied by the uplink control channel.

For another example, the first configuration information may further include information of at least one of: an AI function, an AI characteristic, or an AI model corresponding to the one or more types of first time-frequency units. For example, an ID of an AI function, an ID of an AI characteristic, an ID of an AI model, etc.

As another example, the first configuration information may further include information of at least one of: an AI function, an AI characteristic, or an AI model corresponding to the one or more types of first PUCCHs.

The artificial intelligence information corresponding to the first time-frequency unit, the first uplink control channel, or the time-frequency resource of the first uplink control channel is configured through the first configuration information, which can bound the relationship between the artificial intelligence information and the control channel or reference signal, so that appropriate artificial intelligence information (such as an AI function, an AI characteristic, or an AI model) is adapted to the control channel or the reference signal, and the accuracy of the signal processing result is improved.

In an implementation, the first configuration information is carried in configuration information for the time-frequency resource of the first uplink control channel. For example, one piece of first configuration information is included in configuration information of one PUCCH resource.

In an implementation, the first communication device receives a set of first configuration information. The set of first configuration information is carried in configuration information of time-frequency resources of a set of first uplink control channels, and the set of first configuration information corresponds to the configuration information of time-frequency resources of the set of first uplink control channels one-to-one. For example, the network sends configuration information of a set of PUCCH resources to the terminal, and each PUCCH resource has a respective first configuration information.

In an implementation, the method further includes that: at S1620, the first communication device receives first control information. The first control information is used to indicate first configuration information of the first uplink control channel that needs to be used.

For example, the network first sends configuration information of a set of PUCCH resources to the terminal, for example, configuration information of three types of first PUCCH resources. The configuration information of each type of first PUCCH resource is used to configure a time-frequency resource of one first uplink control channel. For example, the first time-frequency unit of the first PUCCH configured by the configuration information C1 includes OFDM1, the first time-frequency unit of the first PUCCH configured by the configuration information C2 includes OFDM2 and OFDM3, and the first time-frequency unit of the first PUCCH configured by the configuration information C3 includes OFDM3 and OFDM4. The network then sends the first downlink control information (DCI) to the terminal, to indicate the configuration information of one PUCCH resource from the configuration information of the set of PUCCH resources, which can also be understood as: the DCI indicates one PUCCH resource from the set of PUCCH resources. For example, when the DCI indicates the configuration information C2, the terminal may transmit the first PUCCH by using the first PUCCH resource configured by C2.

In an implementation, the method further includes that: at S1630, according to the first configuration information and/or the first control information, the first communication device uses artificial intelligence information corresponding to at least one of: a first type of first time-frequency unit, a first type of first uplink control channel, or a time-frequency resource of the first type of first uplink control channel. The first type of first time-frequency unit, the first type of first uplink control channel, and the time-frequency resource of the first type of first uplink control channel are configured by the first configuration information and/or indicated by the first control information.

In an embodiment of the present disclosure, one piece of first configuration information includes artificial intelligence information corresponding to a certain type of first time-frequency unit. For example, OFDM1 corresponds to AI model 1. The first communication device may use the artificial intelligence information to determine the first uplink control channel, and at the receiving end, for example, the second communication device may use the artificial intelligence information to process the received first uplink control channel.

If the first communication device receives one piece of first configuration information, the first time-frequency unit configured by the first configuration information may be used as the first type of first time-frequency unit, and the first uplink control channel may be used as the first type of first uplink control channel. If the first communication device receives the set of first configuration information, the first time-frequency unit indicated by the subsequently received first control information may be used as the first type of first time-frequency unit, and the first uplink control channel may be used as the first type of first uplink control channel.

For example, the terminal receives artificial intelligence information (information of at least one of an AI function, an AI characteristic or an AI model) corresponding to a type of PUCCH resource configured by one piece of first configuration information. For example, at least one of an ID of an AI function, an ID of an AI characteristic, or an ID of an AI model. According to the first configuration information, the terminal starts using an AI function, an AI characteristic, or an AI model corresponding to at least one of: a certain type of first time-frequency unit, a certain type of first PUCCH, or a certain type of PUCCH resource for the first PUCCH.

For another example, the terminal first receives artificial intelligence information corresponding to multiple types of PUCCH resources configured by a set of first configuration information, and then receives artificial intelligence information corresponding to the first type of PUCCH resource indicated by the DCI. According to the DCI, the terminal starts using an AI function, an AI characteristic, or an AI model corresponding to at least one of: the first type of first time-frequency unit, the first type of first PUCCH, or a time-frequency resource for the first type of first PUCCH.

In an embodiment of the present disclosure, the first configuration information may be radio resource control (RRC), system information, or a media access control control element (MAC CE). The first control information may be a DCI or an MAC CE.

In an implementation, the method further includes that the timer may be started while the operation at S1630 is executed. A timing duration of the timer is related to a usage duration of artificial intelligence information corresponding to at least one of: the first type of first time-frequency unit, the first type of first uplink control channel, or a time-frequency resource of the first type of first uplink control channel.

In an embodiment of the present disclosure, a drop-back mechanism may be provided. For example, assuming that there are multiple types of first time-frequency units or multiple types of first PUCCHs, the numbers, positions and the like of the first time-frequency resources in different first PUCCHs may be different. After receiving the first configuration information and/or the first control information, the terminal starts using the first type of first time-frequency unit, the first type of first PUCCH, and the AI function, the AI characteristic or the AI model corresponding to the first type of first PUCCH, and starts a timer. The timer may be a countdown timer or a count-up timer.

In an implementation, different timers are configured for artificial intelligence information corresponding to at least one of: different first time-frequency units, different first uplink control channels, or different first uplink control channels.

In an implementation, the second uplink control channel includes a second time-frequency unit. The second time-frequency unit includes a second reference signal, and a time-frequency resource occupied by the second reference signal is unavailable to transmit signals other than the second reference signal.

In an embodiment of the present disclosure, the second uplink control channel may be referred to as a second type of uplink control channel. The second uplink control channel may include only the second time-frequency unit, and not include the first time-frequency unit. In this case, the time-frequency unit in the second uplink control channel cannot simultaneously transmit the reference signal and other signals. In an embodiment of the present disclosure, the second uplink control channel may be the second PUCCH. For example, all of the M × N time-frequency units of the second PUCCH are the second time-frequency units.

In an implementation, the method further includes at least one of the following:
when the timer expires, the first communication device switches to a second time-frequency unit, a second uplink control channel, and/or non-artificial intelligence information; or
when the timer expires, the first communication device switches to a second type of first time-frequency unit, a second type of first uplink control channel, and/or artificial intelligence information corresponding to the second type of first uplink control channel.

In an embodiment of the present disclosure, if the timer is a countdown timer, the countdown timer can be determined to have timed out when it counts down to zero.

For example, when the countdown timer decreases to zero, the terminal may automatically switch, from the first time-frequency unit, the first PUCCH, the AI function, the AI characteristic, the AI model, to at least one of: the second time-frequency unit, the second PUCCH, the non-AI function, the non-AI characteristic, or the non-AI model.

For another example, when the countdown timer decreases to zero, the terminal may automatically switch, from the first type of first time-frequency unit, the first type of first PUCCH, or the AI function, AI characteristic or AI model corresponding to the first type of first PUCCH, to the second type of first time-frequency unit, the second type of first PUCCH, or the AI function, AI characteristic or AI model corresponding to the second type of first PUCCH.

In an implementation, the second type of first uplink control channel is a default first uplink control channel, and artificial intelligence information corresponding to the second type of first uplink control channel is a default artificial intelligence information. In an embodiment of the present disclosure, the second type of first time-frequency unit may be a default (or preset) first time-frequency unit. The second type of first PUCCH may be a default (or preset) first PUCCH. The AI function, AI characteristic or AI model corresponding to the second type of first PUCCH may be a default (or preset) AI function, AI characteristic or AI model. For example, the default first PUCCH may be a 7-symbol-long PUCCH, which includes 2 OFDM symbols of non-orthogonal RS and 5 OFDM symbols of orthogonal RS . The 2 OFDM symbols may also transmit information or signals (such as UCI) other than RS, but the 5 OFDM symbols of orthogonal RS cannot transmit information or signals other than RS.

In an implementation, the configuration information may correspond to a BWP. For example, corresponding configuration information may be configured separately for each BWP. The first BWP corresponds to the first configuration information, and the second BWP corresponds to the second configuration information. The contents of the first configuration information and the second configuration information may be different. The second configuration information may be used to configure related information of a time-frequency resource occupied by the first uplink control channel, or may be used to configure related information of a time-frequency resource occupied by the second uplink control channel. For example, the time-frequency resources, occupied by the first PUCCH, included in the first configuration information are OFDM2 and OFDM3, and the time-frequency resources, occupied by the first PUCCH, included in the second configuration information are OFDM3 and OFDM4.

In an implementation, the method further includes that: in case that an activated BWP is switched from the first BWP to a second BWP, the first communication device switches from using first configuration information to using second configuration information. The first configuration information corresponds to the first BWP, and the second configuration information corresponds to the second BWP. For example, as the activation BWP is switched from BWP1 to BWP2, the terminal switches, from determining the structure of the PUCCH by using the first configuration information of BWP1, to determining the structure of the PUCCH by using the second configuration information of BWP2.

In an implementation, the method further includes that: the first communication device sends first capability information. The first capability information includes: capability information, associated with the first uplink control channel, of the first communication device.

In an implementation, the capabilities indicated by the first capability information include at least one of: whether the first uplink control channel is supported; a time-frequency resource of uplink control channel for the first uplink control channel; or whether the artificial intelligence information corresponding to the first uplink control channel is supported. For example, the first capability of the terminal includes: whether the terminal supports the first PUCCH. For another example, the first capability of the terminal includes: a certain type of PUCCH resource that the terminal uses for the first PUCCH. For another example, the first capability of the terminal includes: whether the terminal supports a corresponding AI function, AI characteristic or AI model.

In an implementation, the first capability information includes at least one of: an identifier of a supported first uplink control channel; an identifier of a time-frequency resource of uplink control channel for the first uplink control channel; or an identifier of artificial intelligence information corresponding to the first uplink control channel. For example, the first capability information may include the ID of the first PUCCH supported by the terminal. For another example, the first capability information may include an ID of a certain type of PUCCH resource for the first PUCCH. For another example, the first capability information may include an ID of an AI function, an AI characteristic or an AI model corresponding to the first PUCCH.

FIG. 17 is a schematic flowchart of a communication method 1700 according to an embodiment of the present disclosure. The method may optionally be applied to the system illustrated in FIG. 1, but is not limited thereto. The method includes at least some of the following.

At S1710, a second communication device receives a first uplink control channel. A time-frequency resource occupied by the first uplink control channel includes a first time-frequency unit, the first time-frequency unit is used to transmit a first reference signal, and a time-frequency resource occupied by the first reference signal is available to transmit signals other than the first reference signal.

In an implementation, the first time-frequency unit includes a first OFDM symbol.

In an implementation, the first time-frequency unit includes a first RE.

In an implementation, the first reference signal is a non-orthogonal reference signal.

In an implementation, the time-frequency resource occupied by the first uplink control channel further includes a second time-frequency unit. The second time-frequency unit is used to transmit a second reference signal, a time-frequency resource occupied by the second reference signal is unavailable to transmit signals other than the second reference signal.

In an implementation, the second time-frequency unit includes a second OFDM symbol.

In an implementation, the second time-frequency unit includes a second RE.

In an implementation, the second reference signal is an orthogonal reference signal.

In an implementation, the method further includes that: the second communication device configures a first uplink control channel. This operation may be performed individually, or in combination with operation at S1710. For example, after firstly configuring the first PUCCH (e.g., after sending one or a set of configuration information to the first communication device), the second communication device then receives the first PUCCH from the first communication device.

In an implementation, the method further includes that: the second communication device sends one piece of first configuration information or a set of first configuration information. The first configuration information is used to configure related information of a time-frequency resource of the first uplink control channel.

In an implementation, the first configuration information is used to configure at least one of:
information of a frequency domain position of the first reference signal in the first time-frequency unit;
information of a time domain position of the first reference signal in the first time-frequency unit;
information of a frequency domain position of a second reference signal in the first time-frequency unit;
information of a time domain position of the second reference signal in the first time-frequency unit;
artificial intelligence information corresponding to one or more types of first time-frequency units;
artificial intelligence information corresponding to one or more types of first uplink control channels; or
artificial intelligence information corresponding to a time-frequency resource of one or more types of first uplink control channels.

In an implementation, the first configuration information is carried in configuration information for the time-frequency resource of the first uplink control channel.

In an implementation, the set of first configuration information is carried in configuration information of time-frequency resources of a set of first uplink control channels, and the set of first configuration information corresponds to the configuration information of time-frequency resources of the set of first uplink control channels one-to-one.

In an implementation, the method further includes that:
the second communication device sends first control information. The first control information is used to indicate first configuration information of the first uplink control channel that needs to be used. For example, the first control information is used to indicate a time-frequency resource of one first uplink control channel in time-frequency resources of the set of first uplink control channels.

In an implementation, the first configuration information corresponds to the first BWP.

In an implementation, the method further includes that: the second communication device receives first capability information. The first capability information includes: capability information, associated with the first uplink control channel, of the first communication device.

In an implementation, the first capability information include at least one of: whether the first uplink control channel is supported; a time-frequency resource of uplink control channel for the first uplink control channel; or whether the artificial intelligence information corresponding to the first uplink control channel is supported.

In an implementation, whether the first uplink control channel is supported includes at least one of: an identifier of a supported first uplink control channel; an identifier of a time-frequency resource of uplink control channel for the first uplink control channel; or an identifier of artificial intelligence information corresponding to the first uplink control channel.

For specific examples of the method 1700 executed by the second communication device according to the present embodiment, refer to the related descriptions of the second communication device in the above-described methods 1400, 1500, and 1600, which will not be described again here for simplicity.

In an embodiment of the present disclosure, the time-frequency unit includes OFDM symbols as an example for description. The time-frequency unit including REs is similar, which will not be described again. A time-frequency unit of a type of first PUCCH may include a first OFDM symbol and a second OFDM symbol, i.e. a full TDM structure. For example, the first PUCCH is composed of N (N≥1) OFDM symbols. The N OFDM symbols include at least one first OFDM symbol, in which frequency domain resources occupied by all reference signals are available to transmit other signals, the other signals being signals other than the above reference signals. Another OFDM symbol constituting the time-frequency unit of first PUCCH is a second OFDM symbol, in which frequency domain resources occupied by all reference signals are unavailable to transmit other signals, the other signals being signals other than the above reference signals. The second OFDM symbol may or may not include frequency domain resources occupied by the reference signal. In an embodiment of the present disclosure, the first PUCCH may also be referred to as a first type of PUCCH, the first OFDM symbol may also be referred to as a first type of OFDM symbol, the second PUCCH may also be referred to as a second type of PUCCH, and the second OFDM symbol may also be referred to as a second type of OFDM symbol.
1. The configuration method may include that: the network sends first configuration information to the terminal. The first configuration information at least includes one or more of the following information.
   1-1. Information of the time domain positions of the first OFDM symbols included in the time-frequency unit of the first PUCCH, including at least one of the following: the number, positions, serial numbers of the first OFDM symbols, or whether the PUCCH includes the first OFDM symbols.
      Optionally, the first configuration information is used to configure information of the time domain position of the second type of OFDM symbols included in the first PUCCH, and then the terminal determines that except for the time domain positions of the second OFDM symbols, other time domain positions in the first PUCCH are all used to transmit the first type of OFDM symbols.
   1-2. The one or set of first configuration information may further include information of at least one of: an AI function, an AI characteristic or an AI model corresponding to the one or more types of first PUCCHs, for example, an ID of the AI function, an ID of the AI characteristic, and/or an ID of the AI model.
   1-3. The first configuration information may be included in configuration information of one PUCCH resource.
      (1) The network sends configuration information for a set of PUCCH resources to the terminal, each PUCCH resource includes respective first configuration information. The network sends the first DCI to the terminal, to indicate one PUCCH resource from the set of PUCCH resources.
      (2) The one or set of first configuration information may further include information of at least one of: an AI function, an AI characteristic or an AI model corresponding to the one or more types of PUCCH resources, for example, an ID of the AI function, an ID of the AI characteristic, and/or an ID of the AI model.
   1-4. The respective configuration information may be configured separately for each BWP.
2. The first configuration information or the second configuration information may be an RRC, system information, or an MAC CE. The first control information may be a DCI or an MAC CE.
3. The terminal behavior may include that: according to the first configuration information and/or the first control information, the terminal starts using an AI function, an AI characteristic or an AI model which corresponds to a certain type of first OFDM symbol, a certain type of first PUCCH, or a certain type of PUCCH resource for the first PUCCH. The first control information (or referred to as the first indication information) is a DCI or an MAC CE.
   If the BWP 1 is configured with the corresponding first configuration information, the BWP 2 is configured with the corresponding second configuration information. As the activation BWP is switched from BWP1 to BWP2, the terminal switches, from using the first configuration information configured for BWP1, to using the second configuration information configured for BWP2. The types of the information included in the second configuration information and the first configuration information may be the same, or may be different from each other. The contents of the specific information of the second configuration information and the first configuration information may be different.
4. The terminal capability reporting may include that: the terminal reports a first capability. The first capability includes: whether the first PUCCH is supported, a certain type of PUCCH resource for the first PUCCH, and/or whether a corresponding AI function, AI characteristic or AI model is supported. For example, an ID of a first PUCCH supported by the terminal, an ID of a certain type of PUCCH resource for the first PUCCH, and an ID of a corresponding AI function, AI characteristic or AI model may be reported.
5. The fallback mechanism may include that: after receiving the first configuration information or the first control information, the terminal starts using the first type of first PUCCH, and/or the AI function, AI characteristic or AI model corresponding to the first type of first PUCCH, and starts a countdown timer. For example, different countdown timers are configured for different first PUCCHs or their corresponding AI functions, AI characteristics or AI models.

When the countdown timer decreases to zero, automatically switch to the second PUCCH and/or non-AI function/characteristic/algorithm. Alternatively, when the countdown timer decreases to zero, automatically switch to the second type of first PUCCH and/or the AI function, AI characteristic or AI model corresponding to the second type of first PUCCH. The second type of first PUCCH is a default first PUCCH. The AI function, AI characteristic or AI model corresponding to the second type of first PUCCH is a default AI function, AI characteristic or AI model.

### First embodiment: The time-frequency unit of the first PUCCH includes a first OFDM symbol and a second OFDM symbol (i.e., a full TDM structure)

In the present embodiment, the PUCCH including a non-orthogonal RS may be composed of N (N≥1) OFDM symbols, which include at least one OFDM symbol including a non-orthogonal RS. In an OFDM symbol including a non-orthogonal RS, the frequency domain resources occupied by all the RSs can be used to transmit other signals, and the other signals are signals other than the above RSs. Another OFDM symbol that constitutes the PUCCH including a non-orthogonal RS is an OFDM symbol not including a non-orthogonal RS. In the OFDM symbol not including the non-orthogonal RS, the frequency domain resources occupied by all the RSs are not available to transmit other signals, and the other signals are signals other than the above RSs. The OFDM symbol not including the non-orthogonal RS may include the frequency domain resource occupied by the RS, or may not include the frequency domain resource occupied by the RS, that is, no RS may be transmitted in this OFDM symbol.

The first implementation is to keep the existing orthogonal RS symbols unchanged, and place the non-orthogonal RS in the existing OFDM symbols without RS.

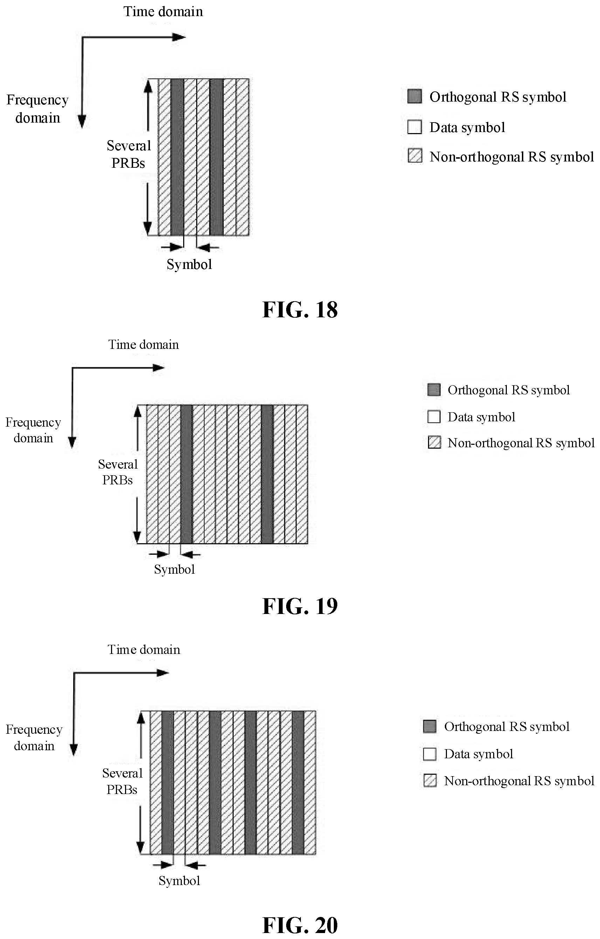

As illustrated in FIG. 18, a PUCCH with a length of 7 symbols may include 2 OFDM symbols containing only the orthogonal RS. The information or signals (for example, UCI) other than RS cannot be transmitted on these 2 OFDM symbols. The remaining 5 symbols contain the non-orthogonal RS, and these 5 symbols may also transmit information or signals (for example, UCI) other than RS.

As illustrated in FIG. 19, a PUCCH with a length of 14 symbols may include 2 OFDM symbols containing only the orthogonal RS. The information or signals (for example, UCI) other than RS cannot be transmitted on these 2 OFDM symbols. The remaining 12 symbols contain the non-orthogonal RS, and these 12 symbols may also transmit information or signals (for example, UCI) other than RS.

As illustrated in FIG. 20, a PUCCH with a length of 14 symbols may include 4 OFDM symbols containing only the orthogonal RS. The information or signals (for example, UCI) other than RS cannot be transmitted on these 4 OFDM symbols. The remaining 10 symbols contain the non-orthogonal RS, and these 10 symbols may also transmit information or signals (for example, UCI) other than RS.

In the present embodiment, in addition to the symbol that transmits orthogonal RS in the traditional PUCCH, the non-orthogonal RS is also transmitted on the other symbols that do not transmit orthogonal RS, so that RS can be transmitted on all OFDM symbols, which significantly improves the performance of uplink channel estimation and enhances the transmission performance of the PUCCH.

A second implementation is that the number of OFDM symbols containing the orthogonal RS can be reduced to reduce the reference signal overhead.

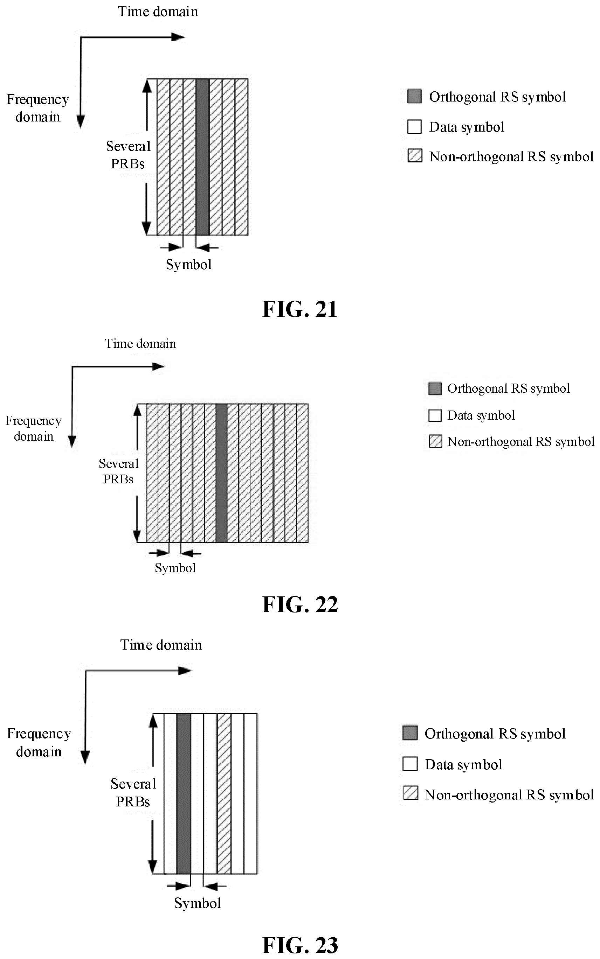

As illustrated in FIG. 21, in an example in which a PUCCH with a length of seven symbols includes non-orthogonal RS symbols, the number of orthogonal RSs may be reduced. For example, in a PUCCH with a length of 7 symbols, 2 OFDM symbols containing only the orthogonal RS may be reduced to one OFDM symbol. The information or signals (for example, UCI) other than RS cannot be transmitted on the one OFDM symbol. The remaining 6 symbols contain the non-orthogonal RS, and these 6 symbols may also transmit information or signals (for example, UCI) other than RS.

As illustrated in FIG. 22, in an example in which a PUCCH with a length of 14 symbols includes non-orthogonal RS symbols, the number of orthogonal RSs may be reduced. For example, in a PUCCH with a length of 14 symbols, 2 OFDM symbols (in FIG. 19) or 4 OFDM symbols (in FIG. 20) containing only the orthogonal RS may be reduced to one OFDM symbol. The information or signals (for example, UCI) other than RS cannot be transmitted on the one OFDM symbol. The remaining 13 symbols contain the non-orthogonal RS, and these 13 symbols may also transmit information or signals (for example, UCI) other than RS.

The present embodiment not only places non-orthogonal RS in symbols that do not transmit RS in the conventional PUCCH, but also converts part of the symbols that transmit orthogonal RS into symbols that transmit non-orthogonal RS. In this way, on the one hand, RS can be transmitted on all OFDM symbols, so that the performance of uplink channel estimation is significantly improved, and the transmission performance of PUCCH is enhanced. On the other hand, the RS overhead can be significantly reduced, which increases the number of symbols that can transmit UCI and improves the transmission capacity of UCI.

A third implementation is to only convert a part of the original OFDM symbols containing orthogonal RS into OFDM symbols containing non-orthogonal RS, so as to reduce the reference signal overhead. However, the non-orthogonal RS is not placed in the symbols originally dedicated to transmitting UCI.

As illustrated in FIG. 23, in an example in which a PUCCH with a length of 7 symbols includes non-orthogonal RS symbols, the number of orthogonal RSs may be reduced without occupying specialized UCI symbols. For example, in a PUCCH with a length of 7 symbols, one OFDM symbol containing only orthogonal RS and one OFDM symbol containing non-orthogonal RS are included, and the remaining 5 symbols do not transmit RS but only transmit UCI.

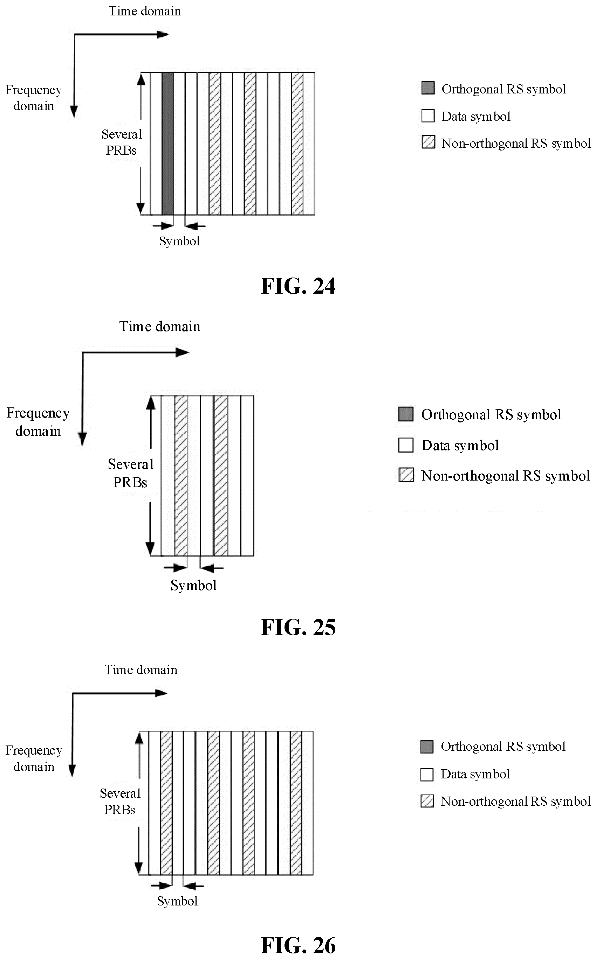

As illustrated in FIG. 24, in an example in which a PUCCH with a length of 14 symbols includes non-orthogonal RS symbols, the number of orthogonal RSs may be reduced without occupying specialized UCI symbols. For example, in a PUCCH with a length of 14 symbols, one OFDM symbol containing only orthogonal RS and three OFDM symbols containing non-orthogonal RS are included, and the remaining 10 symbols do not transmit RS but only transmit UCI.

The present embodiment only replaces a part of the symbols that transmit orthogonal RS in the traditional PUCCH with symbols that transmit non-orthogonal RS, but the original symbols that transmit only UCI remain unchanged, that is, only UCI is still transmitted. Through this implementation, there is no increase in the number of RSs while the RS overhead is reduced, which limits the complexity of an AI/ML algorithm based on non-orthogonal RS.

The fourth implementation is to convert all of the original OFDM symbols containing orthogonal RS into OFDM symbols containing non-orthogonal RS, so as to reduce the reference signal overhead. However, the non-orthogonal RS is not placed in the original symbols for transmitting UCI.

As illustrated in FIG. 25, in an example in which a PUCCH with a length of 7 symbols includes non-orthogonal RS symbols, the non-orthogonal RS symbols may be used to replace the orthogonal RS symbols. For example, in a PUCCH with a length of 7 symbols, 2 OFDM symbols containing only orthogonal RS may be replaced with OFDM symbols containing non-orthogonal RS, and information or signals (for example, UCI) other than RS may be transmitted on these two OFDM symbols. The remaining 5 symbols transmit UCI but not RS.

As illustrated in FIG. 26, in an example in which a PUCCH with a length of 14 symbols includes non-orthogonal RS symbols, the non-orthogonal RS symbols may be used to replace the orthogonal RS symbols. For example, in a PUCCH with a length of 14 symbols, all OFDM symbols containing orthogonal RS may be replaced with OFDM symbols containing non-orthogonal RS. As illustrated in FIG. 26, 4 OFDM symbols containing non-orthogonal RS are set, and information or signals (for example, UCI) other than RS may be transmitted on these 4 OFDM symbols. The remaining 10 symbols transmit UCI but not RS.

The present embodiment replaces all of the symbols, that transmit orthogonal RS, in the traditional PUCCH with symbols that transmit non-orthogonal RS, but the original symbols that transmit only UCI remain unchanged, that is, only UCI is still transmitted. Through this implementation, there is no increase in the number of RSs while the RS overhead is reduced, which limits the complexity of an AI/ML algorithm based on non-orthogonal RS.

### Second embodiment: The first PUCCH includes a first time-frequency unit and a second time-frequency unit (a TDM + FDM structure)

In the present embodiment, among the M × N time-frequency units (for example, 1 symbol ×12 subcarriers) included in the PUCCH including the non-orthogonal RS, one time-frequency unit including the non-orthogonal RS is at least included. The time-frequency unit including the non-orthogonal RS includes the non-orthogonal RS, and the frequency domain resource occupied by the non-orthogonal RS is available to transmit other signals, and the other signals are signals other than the RS. Other time-frequency units in the PUCCH are time-frequency units that do not contain non-orthogonal RS, the RSs in these time-frequency units are all orthogonal RSs. The frequency domain resource occupied by the orthogonal RS is unavailable to transmit other signals, the other signals are signals other than the RS, and these time-frequency units may contain RS or may not contain RS.

The first implementation is to keep the existing orthogonal RS REs unchanged, and place the non-orthogonal RS in the existing RE without RS.

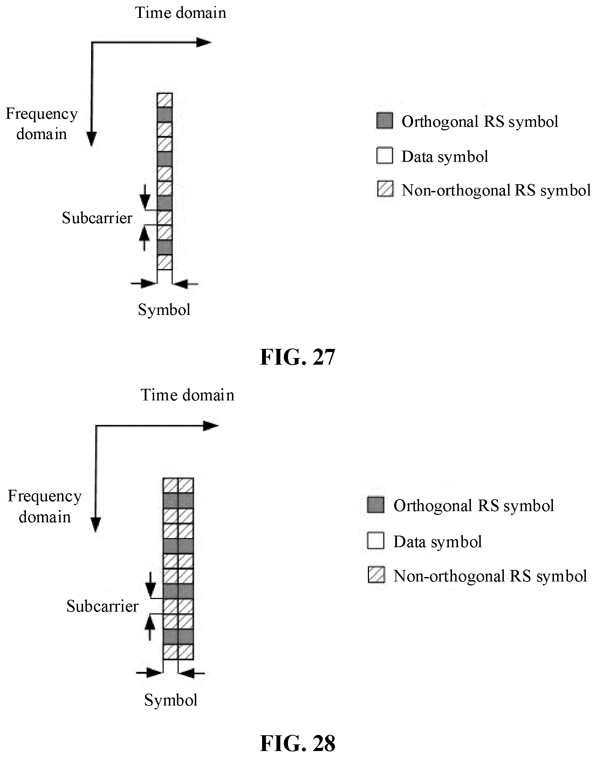

As illustrated in FIG. 27, four REs of a PUCCH with a length of one symbol still transmit the orthogonal RS. The information or signals (for example, UCI) other than RS cannot be transmitted on these four REs. The remaining 8 REs are used to transmit the non-orthogonal RS, and these 8 REs may also transmit information or signals (for example, UCI) other than RS.

As illustrated in FIG. 28, eight REs of a PUCCH with a length of 2 symbols still transmit the orthogonal RS. The information or signals (for example, UCI) other than RS cannot be transmitted on these 8 REs. The remaining 16 REs are used to transmit the non-orthogonal RS, and these 16 REs may also transmit information or signals (for example, UCI) other than RS.

In the present embodiment, in addition to the RE that transmits orthogonal RS in the traditional PUCCH, the non-orthogonal RS is also transmitted on the other REs that do not transmit orthogonal RS, so that RS can be transmitted on all REs, which significantly improves the performance of uplink channel estimation and enhances the transmission performance of the PUCCH.

A second implementation is that the number of REs containing orthogonal RS can be reduced to reduce the RS overhead.

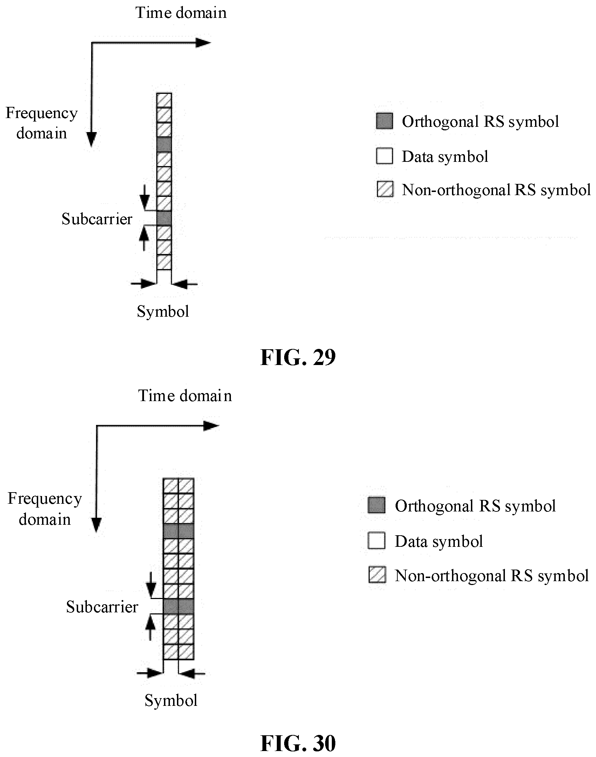

As illustrated in FIG. 29, in an example in which a PUCCH with a length of one symbol includes non-orthogonal RS RE, the number of orthogonal RSs may be reduced. For example, in a PUCCH with a length of one symbol, 4 REs containing only the orthogonal RS may be reduced to 2 REs. The information or signals (for example, UCI) other than RS cannot be transmitted on the 2 REs. The remaining 10 symbols contain the non-orthogonal RS, and these 10 symbols may also transmit information or signals (for example, UCI) other than RS.

As illustrated in FIG. 30, in an example in which a PUCCH with a length of 2 symbols includes non-orthogonal RS RE, the number of orthogonal RSs may be reduced. For example, in a PUCCH with a length of 2 symbols, 8 REs containing only the orthogonal RS may be reduced to 4 REs. The information or signals (for example, UCI) other than RS cannot be transmitted on the 4 REs. The remaining 20 symbols contain the non-orthogonal RS, and these 20 symbols may also transmit information or signals (for example, UCI) other than RS.

The present embodiment not only places non-orthogonal RS in the RE that does not transmit RS in the conventional PUCCH, but also converts a part of the REs that transmit orthogonal RS into REs that transmit non-orthogonal RS. Thus, on the one hand, the RS can be transmitted on all REs, which significantly improves the performance of uplink channel estimation and enhances the transmission performance of the PUCCH. On the other hand, the RS overhead can be significantly reduced, which increases the number of symbols that can transmit UCI and improves the transmission capacity of UCI.

A third implementation is to only convert a part of the original REs containing orthogonal RS into REs containing non-orthogonal RS, so as to reduce the reference signal overhead. However, the non-orthogonal RS is not placed in the RE originally dedicated to transmitting UCI.

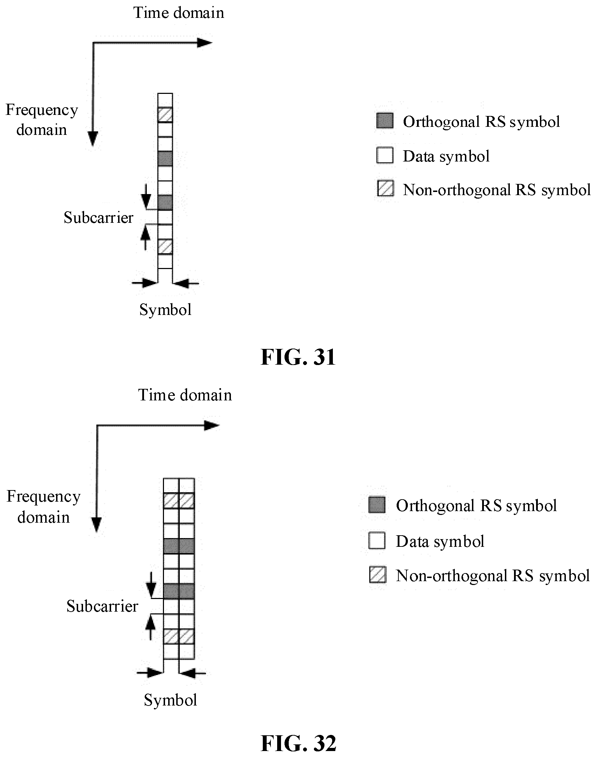

As illustrated in FIG. 31, in an example in which a PUCCH with a length of one symbol includes non-orthogonal RS RE, the number of orthogonal RSs may be reduced without occupying specialized UCI symbols. For example, in a PUCCH with a length of one symbol, 2 REs containing only orthogonal RS and 2REs containing non-orthogonal RS are included, and the remaining 8 REs do not transmit RS but only transmit UCI.

As illustrated in FIG. 32, in an example in which a PUCCH with a length of 2 symbols includes non-orthogonal RS RE, the number of orthogonal RSs may be reduced without occupying specialized UCI symbols. For example, in a PUCCH with a length of 2 symbols, 4 REs containing only orthogonal RS and 4 REs containing non-orthogonal RS are included, and the remaining 16 REs do not transmit RS but only transmit UCI.

The present embodiment only replaces a part of the REs that transmit orthogonal RS in the traditional PUCCH with REs that transmit non-orthogonal RS, but the original REs that transmit only UCI remain unchanged, that is, only UCI is still transmitted. Through this implementation, there is no increase in the number of RSs while the RS overhead is reduced, which limits the complexity of an AI/ML algorithm based on non-orthogonal RS.

The fourth implementation is to convert all of the original REs containing orthogonal RS into REs containing non-orthogonal RS, so as to reduce the RS overhead. However, the non-orthogonal RS is not placed in the original RE for transmitting UCI.

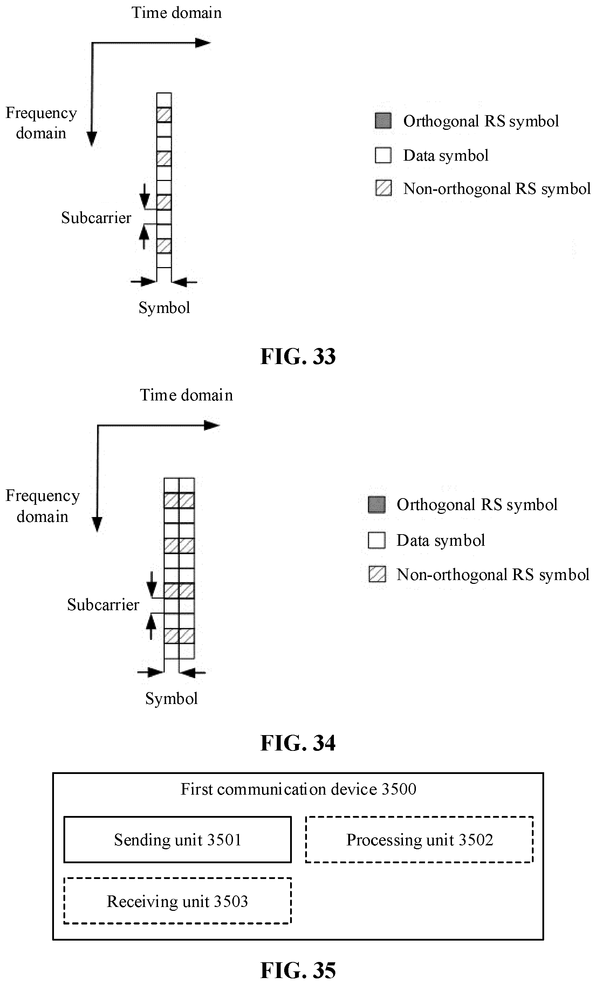

As illustrated in FIG. 33, in a PUCCH with a length of one symbol, 4 REs containing only orthogonal RS may be replaced with REs containing non-orthogonal RS, and information or signals (for example, UCI) other than RS may be transmitted on these 4 REs. The remaining 8 REs transmit UCI but not RS.

For example, in a PUCCH with a length of 2 symbols, 8 REs containing only orthogonal RS may be replaced with REs containing non-orthogonal RS, and information or signals (for example, UCI) other than RS may be transmitted on these 8 REs. The remaining 16 REs transmit UCI but not RS.

The present embodiment only replaces all of the REs that transmit orthogonal RS in the traditional PUCCH with REs that transmit non-orthogonal RS, but the original REs that transmit only UCI remain unchanged, that is, only UCI is still transmitted. Through this implementation, there is no increase in the number of RSs while the RS overhead is reduced, which limits the complexity of an AI/ML algorithm based on non-orthogonal RS.

The communication method according to the embodiment of the present disclosure may include a hybrid PUCCH RS structure including an orthogonal reference signal and a non-orthogonal reference signal, may include a hybrid PUCCH RS structure suitable for short PUCCH and long PUCCH structures, or may include a hybrid PUCCH RS structure suitable for FDM RS multiplexing and TDM RS multiplexing. The ratio between the orthogonal reference signals and the non-orthogonal reference signals in the PUCCH can be flexibly configured according to various scenarios. Compared with a PUCCH only containing orthogonal reference signals, a PUCCH containing a non-orthogonal reference signal may contain a smaller number of orthogonal RS REs to achieve the same PUCCH channel estimation performance, thereby achieving a lower reference signal overhead. Compared with a PUCCH that only uses non-orthogonal reference signals, the PUCCH structure flexibly including orthogonal reference signals and non-orthogonal reference signals can retain a certain number of orthogonal RS REs, which can overcome the shortcomings of insufficient generalization ability and unstable channel estimation performance of AI-based channel estimation algorithm in complex deployment scenarios, and obtain a more reliable and stable channel estimation performance.

FIG. 35 is a schematic block diagram of a first communication device 3500 according to an embodiment of the present disclosure. The first communication device 3500 may include a sending unit 3501.

The sending unit 3501 is used to send a first uplink control channel. A time-frequency resource occupied by the first uplink control channel includes a first time-frequency unit, the first time-frequency unit is used to transmit a first reference signal, and a time-frequency resource occupied by the first reference signal is available to transmit signals other than the first reference signal.

In an implementation, the first time-frequency unit includes a first OFDM symbol.

In an implementation, the first time-frequency unit includes a first RE.

In an embodiment of the present disclosure, the first OFDM symbol may also be referred to as a first type of OFDM symbol, and the first RE may also be referred to as a first type of RE.

In an implementation, the first reference signal is a non-orthogonal reference signal.

In an implementation, the time-frequency resource occupied by the first uplink control channel further includes a second time-frequency unit. The second time-frequency unit is used to transmit a second reference signal, a time-frequency resource occupied by the second reference signal is unavailable to transmit signals other than the second reference signal.

In an implementation, the second time-frequency unit includes a second OFDM symbol.

In an implementation, the second time-frequency unit includes a second RE.

In an embodiment of the present disclosure, the second OFDM symbol may also be referred to as a second type of OFDM symbol, and the second RE may also be referred to as a second type of RE.

In an implementation, the second reference signal is an orthogonal reference signal.

In an implementation, the first communication device further includes: a processing unit 3502 for determining the first uplink control channel.

In an implementation, the first communication device further includes: a receiving unit 3503 for receiving one piece of first configuration information or a set of first configuration information. The first configuration information is used to configure related information of a time-frequency resource of the first uplink control channel.

In an implementation, the first configuration information is used to configure at least one of:
information of a frequency domain position of the first reference signal in the first time-frequency unit;
information of a time domain position of the first reference signal in the first time-frequency unit;
information of a frequency domain position of a second reference signal in the first time-frequency unit;
information of a time domain position of the second reference signal in the first time-frequency unit;
artificial intelligence information corresponding to one or more types of first time-frequency units;
artificial intelligence information corresponding to one or more types of first uplink control channels; or
artificial intelligence information corresponding to a time-frequency resource of one or more types of first uplink control channels.

In an implementation, the first configuration information is carried in configuration information for the time-frequency resource of the first uplink control channel.

In an implementation, the set of first configuration information is carried in configuration information of time-frequency resources of a set of first uplink control channels, and the set of first configuration information corresponds to the configuration information of time-frequency resources of the set of first uplink control channels one-to-one.

In an implementation, the receiving unit 3503 is further used to receive first control information. The first control information is used to indicate first configuration information of the first uplink control channel that needs to be used. For example, a time-frequency resource of a certain first uplink control channel in time-frequency resources of the set of first uplink control channels is indicated through DCI.

In an implementation, the processing unit 3502 is further used to: according to the first configuration information and/or the first control information, use artificial intelligence information corresponding to at least one of: a first type of first time-frequency unit, a first type of first uplink control channel, or a time-frequency resource of the first type of first uplink control channel. The first type of first time-frequency unit, the first type of first uplink control channel, and the time-frequency resource of the first type of first uplink control channel are configured by the first configuration information and/or indicated by the first control information.

In an implementation, the processing unit 3502 is further used to start a timer. A timing duration of the timer is related to a usage duration of artificial intelligence information corresponding to at least one of: the first type of first time-frequency unit, the first type of first uplink control channel, or a time-frequency resource of the first type of first uplink control channel.

In an implementation, different timers are configured for artificial intelligence information corresponding to at least one of: different first time-frequency units, different first uplink control channels, or different first uplink control channels.

In an implementation, the processing unit of the first communication device is further used to execute at least one of:
when the timer expires, switching to at least one of: a second time-frequency unit, a second uplink control channel, or non-artificial intelligence information; or
when the timer expires, switching to at least one of: a second type of first time-frequency unit, a second type of first uplink control channel, or artificial intelligence information corresponding to the second type of first uplink control channel.

In an implementation, the second uplink control channel includes a second time-frequency unit. The second time-frequency unit includes a second reference signal, and a time-frequency resource occupied by the second reference signal is unavailable to transmit signals other than the second reference signal.

In an implementation, the second type of first uplink control channel is a default first uplink control channel, and artificial intelligence information corresponding to the second type of first uplink control channel is a default artificial intelligence information.

In an implementation, the first configuration information corresponds to the first BWP. The second configuration information corresponds to the second BWP.

In an implementation, the processing unit 3502 is further used to: in case that an activated BWP is switched from the first BWP to a second BWP, switch from using first configuration information corresponding to the first BWP to using second configuration information corresponding to the second BWP.

In an implementation, the sending unit 3501 is further used to send first capability information. The first capability information includes: capability information, associated with the first uplink control channel, of the first communication device.

In an implementation, the capabilities indicated by the first capability information include at least one of: whether the first uplink control channel is supported; a time-frequency resource of uplink control channel for the first uplink control channel; or whether the artificial intelligence information corresponding to the first uplink control channel is supported.

In an implementation, the first capability information includes at least one of: an identifier of a supported first uplink control channel; an identifier of a time-frequency resource of uplink control channel for the first uplink control channel; or an identifier of artificial intelligence information corresponding to the first uplink control channel.

The first communication device 3500 according to the embodiment of the present disclosure can realize the corresponding function of the first communication device in the above-described method embodiment. The corresponding process, function, implementation, and beneficial effect of each module (sub-module, unit, component, etc.) in the first communication device 3500 can refer to the corresponding description in the above method embodiment, and will not be repeatedly described here. It should be noted that the functions described with respect to modules (sub-module, unit, component, etc.) in the first communication device 3500 according to the embodiment of the present disclosure may be implemented by different modules (sub-module, unit, component, etc.), or may be implemented by the same module (sub-module, unit, component, etc.).

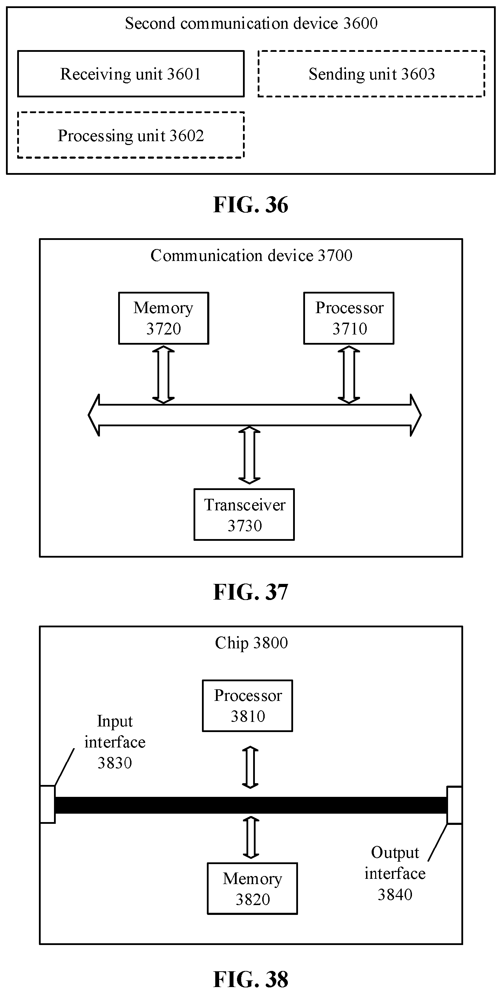

FIG. 36 is a schematic block diagram of a second communication device 3600 according to an embodiment of the present disclosure. The second communication device 3600 may include a receiving unit 3601.

The receive unit 3601 is used to receive a first uplink control channel. A time-frequency resource occupied by the first uplink control channel includes a first time-frequency unit, the first time-frequency unit is used to transmit a first reference signal, and a time-frequency resource occupied by the first reference signal is available to transmit signals other than the first reference signal.

In an implementation, the first time-frequency unit includes a first OFDM symbol.

In an implementation, the first time-frequency unit includes a first RE.

In an implementation, the first reference signal is a non-orthogonal reference signal.

In an implementation, the time-frequency resource occupied by the first uplink control channel further includes a second time-frequency unit. The second time-frequency unit is used to transmit a second reference signal, a time-frequency resource occupied by the second reference signal is unavailable to transmit signals other than the second reference signal.

In an implementation, the second time-frequency unit includes a second OFDM symbol.

In an implementation, the second time-frequency unit includes a second RE.

In an implementation, the second reference signal is an orthogonal reference signal.

In an implementation, the second communication device further includes: a processing unit 3602 for configuring the first uplink control channel.

In an implementation, the second communication device further includes: a sending unit 3603 for sending one piece of first configuration information or a set of first configuration information. The first configuration information is used to configure time-frequency resource related information of the first uplink control channel.

In an implementation, the first configuration information is used to configure at least one of:
information of a frequency domain position of the first reference signal in the first time-frequency unit;
information of a time domain position of the first reference signal in the first time-frequency unit;
information of a frequency domain position of a second reference signal in the first time-frequency unit;
information of a time domain position of the second reference signal in the first time-frequency unit;
artificial intelligence information corresponding to one or more types of first time-frequency units;
artificial intelligence information corresponding to one or more types of first uplink control channels; or
artificial intelligence information corresponding to a time-frequency resource of one or more types of first uplink control channels.

In an implementation, the first configuration information is carried in configuration information for the time-frequency resource of the first uplink control channel.

In an implementation, the set of first configuration information is carried in configuration information of time-frequency resources of a set of first uplink control channels, and the set of first configuration information corresponds to the configuration information of time-frequency resources of the set of first uplink control channels one-to-one.

In an implementation, the sending unit 3603 is further used to send first control information. The first control information is used to indicate a time-frequency resource of one first uplink control channel in time-frequency resources of the set of first uplink control channels.

In an implementation, the first configuration information corresponds to a BWP.

In an implementation, the receiving unit 3601 is used to receive first capability information. The first capability information includes: capability information, associated with the first uplink control channel, of the first communication device.

In an implementation, the capabilities indicated by the first capability information include at least one of: whether the first uplink control channel is supported; a time-frequency resource of uplink control channel for the first uplink control channel; or whether the artificial intelligence information corresponding to the first uplink control channel is supported.

In an implementation, the first capability information includes at least one of: an identifier of a supported first uplink control channel; an identifier of a time-frequency resource of uplink control channel for the first uplink control channel; or an identifier of artificial intelligence information corresponding to the first uplink control channel.

The second communication device 3600 according to the embodiment of the present disclosure can realize the corresponding function of the second communication device 3600 in the above-described method embodiment. The corresponding process, function, implementation, and beneficial effect of each module (sub-module, unit, component, etc.) in the second communication device 3600 can refer to the corresponding description in the above method embodiment, and will not be repeatedly described here. It should be noted that the functions described with respect to modules (sub-module, unit, component, etc.) in the second communication device 3600 according to the embodiment of the present disclosure may be implemented by different modules (sub-module, unit, component, etc.), or may be implemented by the same module (sub-module, unit, component, etc.).

FIG. 37 is a schematic structure diagram of a communication device 3700 according to an embodiment of the present disclosure. The communication device 3700 includes a processor 3710. The processor 3710 may call and run a computer program from a memory, to cause the communication device 3700 to implement the method in the embodiment of the present disclosure.

In an implementation, the communication device 3700 may also include a memory 3720. The processor 3710 may call and run a computer program from the memory 3720, to cause the communication device 3700 to implement the method in the embodiment of the present disclosure.

The memory 3720 may be a separate device independent of the processor 3710, or may be integrated in the processor 3710.

In an implementation, the communication device 3700 may further include a transceiver 3730. The processor 3710 may control the transceiver 3730 to communicate with other devices, specifically, may send information or data to other devices, or receive information or data sent by other devices.

Here, the transceiver 3730 may include a transmitter and a receiver. The transceiver 3730 may further include antennas, and the number of antennas may be one or more.

In an implementation, the communication device 3700 may be the first communication device according to the embodiment of the present disclosure. The communication device 3700 may realize the corresponding flow implemented by the first communication device in each method according to the embodiment of the present disclosure, and the description thereof will not be repeated here for the sake of brevity.

In an implementation, the communication device 3700 may be the second communication device according to the embodiment of the present disclosure. The communication device 3700 may realize the corresponding flow implemented by the second communication device in each method according to the embodiment of the present disclosure, and the description thereof will not be repeated here for the sake of brevity.

FIG. 38 is a schematic structure diagram of a chip 3800 according to an embodiment of the present disclosure. The chip 3800 includes a processor 3810. The processor 3810 may call and run a computer program from a memory to implement the method in the embodiment of the present disclosure.

In an implementation, the chip 3800 may also include a memory 3820. The processor 3810 may call and run a computer program from the memory 3820, to implement the method executed by the first communication device or second communication device in the embodiment of the present disclosure.

The memory 3820 may be a separate device independent of the processor 3810, or may be integrated in the processor 3810.

In an implementation, the chip 3800 may also include an input interface 3830. The processor 3810 may control the input interface 3830 to communicate with other devices or chips, specifically, may acquire information or data sent by other devices or chips.

In an implementation, the chip 3800 may also include an output interface 3840. The processor 3810 may control the output interface 3840 to communicate with other devices or chips, specifically, may output information or data to other devices or chips.

In an implementation, the chip may be applied to the first communication device in the embodiment of the present communication application, and the chip may realize the corresponding process implemented by the first communication device in each method according to the embodiment of the present disclosure, which is not described here for the sake of brevity.

In an implementation, the chip may be applied to the second communication device in the embodiment of the present communication application, and the chip may realize the corresponding process implemented by the second communication device in each method according to the embodiment of the present disclosure, which is not described here for the sake of brevity.

The chip applied to the first communication device and the chip applied to the second communication device may be the same chip or different chips.

It should be understood that the chip mentioned in the embodiments of the present disclosure may also be referred to as a system level chip, a system chip, a chip system, or a system-on-chip (SoC).

The processor mentioned above may be a general-purpose processor, a digital signal processor (DSP), a field programmable gate array (FPGA), an application specific integrated circuit (ASIC) or other programmable logic device, a transistor logic device, a discrete hardware component, or the like. The aforementioned general-purpose processor may be a microprocessor, or may be any conventional processor or the like.

The aforementioned memory may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It is also understood that the memory described above is exemplary but not limiting, for example, the memory in the embodiments of the present disclosure may also be a static random access memory (SRAM), a dynamic random access memory (DRAM), a synchronous dynamic random access memory (SDRAM), a double data rate SDRAM (DDR SDRAM), an Enhanced SDRAM (ESDRAM), a synch link DRAM (SLDRAM), and a Direct Rambus RAM (DR RAM). That is, the memory in the embodiments of the present disclosure is intended to include, but is not limited to, these and any other suitable type of memory.

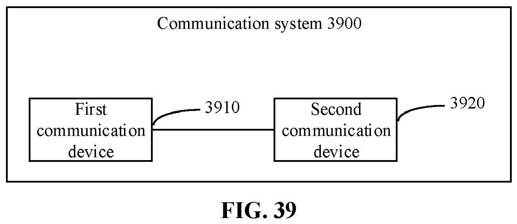

FIG. 39 is a schematic block diagram of a communication system 3900 according to an embodiment of the present disclosure. The communication system 3900 includes the first communication device 3910 and the second communication device 3920. The first communication device 3910 is used to send a first uplink control channel. A time-frequency resource occupied by the first uplink control channel includes a first time-frequency unit, the first time-frequency unit is used to transmit a first reference signal, and a time-frequency resource occupied by the first reference signal is available to transmit signals other than the first reference signal. The second communication device 3920 is used to receive the first uplink control channel.

The first communication device 3910 may be used to implement the corresponding functions implemented by the first communication device in the above-described method, and the second communication device 3920 may be used to implement the corresponding functions implemented by the second communication device in the above-described method. For the sake of brevity, it will not be repeated here.

In the embodiments described above, it may be implemented in whole or in part by software, hardware, firmware, or any combination thereof. When implemented by using software, it may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer may be a general purpose computer, a special purpose computer, a computer network, or other programmable apparatus. The computer instructions may be stored in a computer-readable storage medium or transmitted from one computer-readable storage medium to another computer-readable storage medium. For example, the computer instructions may be transmitted from one website site, computer, server, or data center to another website site, computer, server, or data center in the wired (e.g., coaxial cable, optical fiber, digital subscriber line (DSL)) or wireless (e.g., infrared, wireless, microwave, etc.) manner. The computer-readable storage medium may be any available medium accessible by a computer, or may be a data storage device such as a server, a data center, or the like that integrates one or more available media. The available medium may be a magnetic medium (e.g., a floppy disk, a hard disk, a magnetic tape), an optical medium (e.g., a DVD), or a semiconductor medium (e.g., a solid state disk (SSD)), etc.

It should be understood that in various embodiments of the present disclosure, the size of the sequence number in the above-described process does not mean the sequence of execution (the sequence of execution in each process should be determined by its function and internal logic), and should not constitute any limitation on the implementation of the embodiments of the present disclosure.

Those skilled in the art can clearly understand that for convenience and conciseness of the description, the specific working processes of the system, devices and units described above can refer to the corresponding processes in the aforementioned method embodiments, and will not be repeatedly described here.

The above are merely detailed embodiments of the present disclosure, but the protection scope of the present disclosure is not limited thereto, and any person skilled in the art can easily think of changes or substitutions within the technical scope disclosed in the present disclosure, which should be covered within the protection scope of the present disclosure. Therefore, the protection scope of the present disclosure should be based on the protection scope of the claims.

## Claims

1. A communication method, comprising:
sending, by a first communication device, a first uplink control channel, wherein a time-frequency resource occupied by the first uplink control channel comprises a first time-frequency unit, the first time-frequency unit is used to transmit a first reference signal, and a time-frequency resource occupied by the first reference signal is available to transmit signals other than the first reference signal.

2. The method of claim 1, wherein the first time-frequency unit comprises a first orthogonal frequency division multiplexing (OFDM) symbol or a first resource element (RE), and the first reference signal is a non-orthogonal reference signal.

3. The method of claim 1 or 2, wherein the time-frequency resource occupied by the first uplink control channel further comprises: a second time-frequency unit, wherein the second time-frequency unit is used to transmit a second reference signal, a time-frequency resource occupied by the second reference signal is unavailable to transmit signals other than the second reference signal.

4. The method of claim 3, wherein the second time-frequency unit comprises a second OFDM symbol or a second RE, and the second reference signal is an orthogonal reference signal.

5. The method of any one of claims 1-4, further comprising:
receiving, by the first communication device, one piece of first configuration information or a set of first configuration information, wherein the first configuration information is used to configure related information of a time-frequency resource of the first uplink control channel.

6. The method of claim 5, wherein the first configuration information is used to configure at least one of:
information of a frequency domain position of the first reference signal in the first time-frequency unit;
information of a time domain position of the first reference signal in the first time-frequency unit;
information of a frequency domain position of a second reference signal in the first time-frequency unit;
information of a time domain position of the second reference signal in the first time-frequency unit;
artificial intelligence information corresponding to one or more types of first time-frequency units;
artificial intelligence information corresponding to one or more types of first uplink control channels; or
artificial intelligence information corresponding to a time-frequency resource of one or more types of first uplink control channels.

7. The method of claim 5 or 6, wherein the set of first configuration information is carried in configuration information of time-frequency resources of a set of first uplink control channels, and the set of first configuration information corresponds to the configuration information of time-frequency resources of the set of first uplink control channels one-to-one.

8. The method of any one of claims 5-7, wherein the method further comprises: receiving, by the first communication device, first control information, wherein the first control information is used to indicate first configuration information of the first uplink control channel that needs to be used.

9. The method of claim 8, further comprising: using, by the first communication device and according to the first configuration information and/or the first control information, artificial intelligence information corresponding to at least one of: a first type of first time-frequency unit, a first type of first uplink control channel, or a time-frequency resource of the first type of first uplink control channel, wherein the first type of first time-frequency unit, the first type of first uplink control channel, and the time-frequency resource of the first type of first uplink control channel are configured by the first configuration information and/or indicated by the first control information.

10. The method of claim 9, further comprising: starting, by the first communication device, a timer, wherein a timing duration of the timer is related to a usage duration of artificial intelligence information corresponding to at least one of: the first type of first time-frequency unit, the first type of first uplink control channel, or a time-frequency resource of the first type of first uplink control channel.

11. The method of claim 10, wherein different timers are configured for artificial intelligence information corresponding to at least one of: different first time-frequency units, different first uplink control channels, or different first uplink control channels.

12. The method of claim 10 or 11, further comprising at least one of the following:
when the timer expires, the first communication device switches to at least one of: a second time-frequency unit, a second uplink control channel, or non-artificial intelligence information; or
when the timer expires, the first communication device switches to at least one of: a second type of first time-frequency unit, a second type of first uplink control channel, or artificial intelligence information corresponding to the second type of first uplink control channel;
wherein the second uplink control channel comprises a second time-frequency unit, the second time-frequency unit comprises a second reference signal, and a time-frequency resource occupied by the second reference signal is unavailable to transmit signals other than the second reference signal.

13. The method of claim 12, wherein the second type of first uplink control channel is a default first uplink control channel, and artificial intelligence information corresponding to the second type of first uplink control channel is a default artificial intelligence information.

14. The method of claim 5, wherein the first configuration information corresponds to a first bandwidth part (BWP).

15. The method of claim 14, further comprising: in case that an activated BWP is switched from the first BWP to a second BWP, switching, by the first communication device, from using first configuration information to using second configuration information, wherein the first configuration information corresponds to the first BWP, and the second configuration information corresponds to the second BWP.

16. The method of any one of claims 1-15, further comprising: sending, by the first communication device, first capability information, wherein the first capability information comprises capability information of the first communication device associated with the first uplink control channel.

17. The method of claim 16, wherein a capability indicated by the first capability information comprises at least one of:
whether the first uplink control channel is supported;
a time-frequency resource of uplink control channel for the first uplink control channel; or
whether artificial intelligence information corresponding to the first uplink control channel is supported.

18. The method of claim 17, wherein the first capability information comprises at least one of:
an identifier of a supported first uplink control channel;
an identifier of the time-frequency resource of uplink control channel for the first uplink control channel; or
an identifier of the artificial intelligence information corresponding to the first uplink control channel.

19. A communication method, comprising:
receiving, by a second communication device, a first uplink control channel, wherein a time-frequency resource occupied by the first uplink control channel comprises a first time-frequency unit, the first time-frequency unit is used to transmit a first reference signal, and a time-frequency resource occupied by the first reference signal is available to transmit signals other than the first reference signal.

20. The method of claim 19, wherein the first time-frequency unit comprises a first orthogonal frequency division multiplexing (OFDM) symbol or a first resource element (RE), and the first reference signal is a non-orthogonal reference signal.

21. The method of claim 19 or 20, wherein the time-frequency resource occupied by the first uplink control channel further comprises: a second time-frequency unit, wherein the second time-frequency unit is used to transmit a second reference signal, a time-frequency resource occupied by the second reference signal is unavailable to transmit signals other than the second reference signal.

22. The method of claim 21, wherein the second time-frequency unit comprises a second OFDM symbol or a second RE, and the second reference signal is an orthogonal reference signal.

23. The method of any one of claims 19 to 22, further comprising: sending, by the second communication device, one piece of first configuration information or a set of first configuration information, wherein the first configuration information is used to configure related information of a time-frequency resource of the first uplink control channel.

24. The method of claim 23, wherein the first configuration information is used to configure at least one of:
information of a frequency domain position of the first reference signal in the first time-frequency unit;
information of a time domain position of the first reference signal in the first time-frequency unit;
information of a frequency domain position of a second reference signal in the first time-frequency unit;
information of a time domain position of the second reference signal in the first time-frequency unit;
artificial intelligence information corresponding to one or more types of first time-frequency units;
artificial intelligence information corresponding to one or more types of first uplink control channels; or
artificial intelligence information corresponding to a time-frequency resource of one or more types of first uplink control channels.

25. The method of claim 23 or 24, wherein the set of first configuration information is carried in configuration information of time-frequency resources of a set of first uplink control channels, and the set of first configuration information corresponds to the configuration information of time-frequency resources of the set of first uplink control channels one-to-one.

26. The method of claim 25, further comprising: sending, by the second communication device, first control information, wherein the first control information is used to indicate first configuration information of the first uplink control channel that needs to be used.

27. The method of claim 23, wherein the first configuration information corresponds to a first bandwidth part (BWP).

28. The method of any one of claims 19-27, further comprising: receiving, by the second communication device, first capability information, wherein the first capability information comprises capability information of a first communication device associated with the first uplink control channel.

29. The method of claim 28, wherein a capability indicated by the first capability information comprises at least one of:
whether the first uplink control channel is supported;
a time-frequency resource of uplink control channel for the first uplink control channel; or
whether artificial intelligence information corresponding to the first uplink control channel is supported.

30. The method of claim 29, wherein the first capability information comprises at least one of:
an identifier of a supported first uplink control channel;
an identifier of the time-frequency resource of uplink control channel for the first uplink control channel; or
an identifier of the artificial intelligence information corresponding to the first uplink control channel.

31. A first communication device, comprising: a sending unit for sending a first uplink control channel, wherein a time-frequency resource occupied by the first uplink control channel comprises a first time-frequency unit, the first time-frequency unit is used to transmit a first reference signal, and a time-frequency resource occupied by the first reference signal is available to transmit signals other than the first reference signal.

32. The first communication device of claim 31, wherein the first time-frequency unit comprises a first orthogonal frequency division multiplexing (OFDM) symbol or a first resource element (RE), and the first reference signal is a non-orthogonal reference signal.

33. The first communication device of claim 31 or 32, wherein the time-frequency resource occupied by the first uplink control channel further comprises: a second time-frequency unit, wherein the second time-frequency unit is used to transmit a second reference signal, and a time-frequency resource occupied by the second reference signal is unavailable to transmit signals other than the second reference signal.

34. The first communication device of claim 33, wherein the second time-frequency unit comprises a second OFDM symbol or a second RE, and the second reference signal is an orthogonal reference signal.

35. The first communication device of any one of claims 31-34, wherein the first communication device further comprises:
a receiving unit for receiving one piece of first configuration information or a set of first configuration information, wherein the first configuration information is used to configure related information of a time-frequency resource of the first uplink control channel.

36. The first communication device of claim 35, wherein the first configuration information is used to configure at least one of:
information of a frequency domain position of the first reference signal in the first time-frequency unit;
information of a time domain position of the first reference signal in the first time-frequency unit;
information of a frequency domain position of a second reference signal in the first time-frequency unit;
information of a time domain position of the second reference signal in the first time-frequency unit;
artificial intelligence information corresponding to one or more types of first time-frequency units;
artificial intelligence information corresponding to one or more types of first uplink control channels; or
artificial intelligence information corresponding to a time-frequency resource of one or more types of first uplink control channels.

37. The first communication device of claim 35 or 36, wherein the set of first configuration information is carried in configuration information of time-frequency resources of a set of first uplink control channels, and the set of first configuration information corresponds to the configuration information of time-frequency resources of the set of first uplink control channels one-to-one.

38. The first communication device of any one of claims 35-37, wherein the receiving unit is further used to receive first control information, wherein the first control information is used to indicate first configuration information of the first uplink control channel that needs to be used.

39. The first communication device according to claim 38, wherein the first communication device further comprises: a processing unit for using, according to the first configuration information and/or the first control information, artificial intelligence information corresponding to at least one of: a first type of first time-frequency unit, a first type of first uplink control channel, or a time-frequency resource of the first type of first uplink control channel, wherein the first type of first time-frequency unit, the first type of first uplink control channel, and the time-frequency resource of the first type of first uplink control channel are configured by the first configuration information and/or indicated by the first control information.

40. The first communication device according to claim 39, wherein the processing unit is further used to start a timer, wherein a timing duration of the timer is related to a usage duration of artificial intelligence information corresponding to at least one of: the first type of first time-frequency unit, the first type of first uplink control channel, or a time-frequency resource of the first type of first uplink control channel.

41. The first communication device of claim 40, wherein different timers are configured for artificial intelligence information corresponding to at least one of: different first time-frequency units, different first uplink control channels, or different first uplink control channels.

42. The first communication device of claim 40 or 41, wherein the processing unit is further used to execute at least one of the following:
when the timer expires, switching to at least one of: a second time-frequency unit, a second uplink control channel, or non-artificial intelligence information; or
when the timer expires, switching to at least one of: a second type of first time-frequency unit, a second type of first uplink control channel, or artificial intelligence information corresponding to the second type of first uplink control channel;
wherein the second uplink control channel comprises a second time-frequency unit, the second time-frequency unit comprises a second reference signal, and a time-frequency resource occupied by the second reference signal is unavailable to transmit signals other than the second reference signal.

43. The first communication device of claim 42, wherein the second type of first uplink control channel is a default first uplink control channel, and artificial intelligence information corresponding to the second type of first uplink control channel is a default artificial intelligence information.

44. The first communication device of claim 35, wherein the first configuration information corresponds to a first bandwidth part (BWP).

45. The first communication device of claim 44, wherein the processing unit is further used to switch from using first configuration information to using second configuration information in case that an activated BWP is switched from the first BWP to a second BWP, wherein the first configuration information corresponds to the first BWP, and the second configuration information corresponds to the second BWP.

46. The first communication device of any one of claims 31-45, wherein the sending unit is further used to send first capability information, wherein the first capability information comprises capability information of the first communication device associated with the first uplink control channel.

47. The first communication device of claim 46, wherein a capability indicated by the first capability information comprises at least one of:
whether the first uplink control channel is supported;
a time-frequency resource of uplink control channel for the first uplink control channel; or
whether artificial intelligence information corresponding to the first uplink control channel is supported.

48. The first communication device of claim 47, wherein the first capability information comprises at least one of:
an identifier of a supported first uplink control channel;
an identifier of the time-frequency resource of uplink control channel for the first uplink control channel; or
an identifier of the artificial intelligence information corresponding to the first uplink control channel.

49. A second communication device, comprising: a receiving unit for receiving a first uplink control channel, wherein a time-frequency resource occupied by the first uplink control channel comprises a first time-frequency unit, the first time-frequency unit is used to transmit a first reference signal, and a time-frequency resource occupied by the first reference signal is available to transmit signals other than the first reference signal.

50. The second communication device of claim 49, wherein the first time-frequency unit comprises a first orthogonal frequency division multiplexing (OFDM) symbol or a first resource element (RE), and the first reference signal is a non-orthogonal reference signal.

51. The second communication device of claim 49 or 50, wherein the time-frequency resource occupied by the first uplink control channel further comprises: a second time-frequency unit, wherein the second time-frequency unit is used to transmit a second reference signal, and a time-frequency resource occupied by the second reference signal is unavailable to transmit signals other than the second reference signal.

52. The second communication device of claim 51, wherein the second time-frequency unit comprises a second OFDM symbol or a second RE, and the second reference signal is an orthogonal reference signal.

53. The second communication device of any one of claims 49-52, wherein the second communication device further comprises:
a sending unit for sending one piece of first configuration information or a set of first configuration information, wherein the first configuration information is used to configure related information of a time-frequency resource of the first uplink control channel.

54. The second communication device of claim 53, wherein the first configuration information is used to configure at least one of:
information of a frequency domain position of the first reference signal in the first time-frequency unit;
information of a time domain position of the first reference signal in the first time-frequency unit;
information of a frequency domain position of a second reference signal in the first time-frequency unit;
information of a time domain position of the second reference signal in the first time-frequency unit;
artificial intelligence information corresponding to one or more types of first time-frequency units;
artificial intelligence information corresponding to one or more types of first uplink control channels; or
artificial intelligence information corresponding to a time-frequency resource of one or more types of first uplink control channels.

55. The second communication device of claim 53 or 54, wherein the set of first configuration information is carried in configuration information of time-frequency resources of a set of first uplink control channels, and the set of first configuration information corresponds to the configuration information of time-frequency resources of the set of first uplink control channels one-to-one.

56. The second communication device of any one of claims 53-55, wherein the sending unit is further used to send first control information, wherein the first control information is used to indicate first configuration information of the first uplink control channel that needs to be used.

57. The second communication device of claim 56, wherein the first configuration information corresponds to a bandwidth part (BWP).

58. The second communication device of any one of claims 49-57, wherein the receiving unit is used to receive first capability information, wherein the first capability information comprises capability information of a first communication device associated with the first uplink control channel.

59. The second communication device of claim 58, wherein a capability indicated by the first capability information comprises at least one of:
whether the first uplink control channel is supported;
a time-frequency resource of uplink control channel for the first uplink control channel; or
whether artificial intelligence information corresponding to the first uplink control channel is supported.

60. The second communication device of claim 59, wherein the first capability information comprises at least one of:
an identifier of a supported first uplink control channel;
an identifier of the time-frequency resource of uplink control channel for the first uplink control channel; or
an identifier of the artificial intelligence information corresponding to the first uplink control channel.

61. A communication device, comprising: a transceiver, a processor and a memory, wherein the memory is used for storing a computer program, the transceiver is used for communicating with other devices, and the processor is used for calling and running the computer program stored in the memory to cause the communication device to perform the method of any one of claims 1-30.

62. A chip, comprising: a processor for calling and running a computer program in a memory, to cause a device on which the chip is mounted to perform the method of any one of claims 1-30.

63. A computer readable storage medium, having stored thereon a computer program that, when executed by a device, causes the device to perform the method of any one of claims 1-30.

64. A computer program product, comprising: computer program instructions that cause a computer to perform the method of any one of claims 1-30.

65. A computer program, causing a computer to perform the method of any one of claims 1-30.

66. A communication system, comprising:
a first communication device for performing the method of any one of claims 1-18; and
a second communication device for performing the method of any one of claims 19-30.
